(19) **Europäisches Patentamt**
**European Patent Office**
**Office européen des brevets**

(11) **EP 4 664 324 A1**

(12) **EUROPEAN PATENT APPLICATION**

(43) Date of publication:
**17.12.2025 Bulletin 2025/51**

(21) Application number: **24182419.2**

(22) Date of filing: **14.06.2024**

(51) International Patent Classification (IPC):
**G06F 16/906** (2019.01)   **G06N 3/00** (2023.01)

(52) Cooperative Patent Classification (CPC):
**G06F 16/906; G06N 3/00; G06N 3/084**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Technische Universität München**
  **80333 München (DE)**
• **Arizona Board Of Regents**
  **On Behalf Of Arizona State University**
  **Phoenix, AZ 85004 (US)**

(72) Inventors:
• **BITAR, Rawad**
  **80993 Munich (DE)**
• **EGGER, Maximilian**
  **81737 Munich (DE)**
• **DE SÁ DELGADO NETO, Afonso**
  **80686 Munich (DE)**
• **BAKSHI, Mayank**
  **Phoenix, 85004 (US)**

(74) Representative: Hofmann, Matthias et al
**Boehmert & Boehmert**
**Anwaltspartnerschaft mbB**
**Pettenkoferstraße 22**
**80336 München (DE)**

(54) **METHOD AND SYSTEM FOR TRAINING A DISTRIBUTED MODEL**

(57)    The present disclosure provides computer-implemented method for training a model using a central node and a plurality of client nodes, comprising, at one or more of the plurality of client nodes: receiving a set of model parameters and an initial seed from the central node; determining an update direction based on the initial seed; computing scalar reflecting a sign and a size of an approximation of a projection of a gradient of a loss function on the update direction, using the set of model parameters; sending the scalar of the approximated gradient projection to the central node; receiving a model update scalar from the central node; and updating the set of model parameters in the update direction based on the model update scalar.

Robust aggregation (cf. 3.1.3.2):
receive $\{g_r^i\}_{r\in[k],i\in\{1,2,3\}} \to$ compute trimmed mean $\{g_r\}_{r\in[k]}$

$\{g_r\}_{r\in[k]}$   $\{g_r\}_{r\in[k]}$   $\{g_r^2\}_{r\in[k]}$   $\{g_r^3\}_{r\in[k]}$
$\{g_r^1\}_{r\in[k]}$   $\{g_r\}_{r\in[k]}$

UE 1   UE 2   UE 3

Client synchronization (cf. 3.1.3.3): receive $\{g_r\}_{r\in[k]} \to$ update $w_j$'s
Clients training (cf. 3.1.3.1): use $w_j$'s $\to$ compute $g_r^i$

FIG. 4

**Description**

## TECHNICAL FIELD

The present disclosure is in the field of machine learning, specifically a method and system for training a model using a central node and a plurality of client nodes.

## BACKGROUND

Federated Learning is a distributed machine learning approach where a shared model is trained across multiple devices or servers, each holding their own local training data, and a central server, called the federator. Rather than transferring the training data itself, these devices (called clients) collaboratively update and improve a central model by exchanging model parameters with the federator. Federated Learning (FL) faces several challenges, for example, security against Byzantine clients and communication efficiency.

Security against Byzantine clients, i.e., clients deliberately corrupting their computation to disrupt the process, is paramount. Only one Byzantine client inserting errors can be enough to prevent the learning algorithm from converging. Furthermore, to train the distributed model, clients can run backpropagation on their local data and communicate a d-dimensional vector (usually d is in the order of $10^6$-$10^9$) to the federator, making communication and computation two crucial bottlenecks, especially in settings where the clients are edge devices with limited computation and communication capabilities.

McMahan, B., Moore, E., Ramage, D., Hampson, S., and y Areas, B. A. "Communication-Efficient Learning of Deep Networks from Decentralized Data" presents a practical method for the federated learning of deep networks based on iterative model averaging, and conduct an extensive empirical evaluation, considering five different model architectures and four datasets.

Yin, D., Chen, Y., Kannan, R., and Bartlett, P. "Byzantine - Robust Distributed Learning: Towards Optimal Statistical Rates" develops distributed optimization algorithms that are provably robust against Byzantine failures-arbitrary and potentially adversarial behavior, in distributed computing systems, with a focus on achieving optimal statistical performance.

## SUMMARY

According to a first aspect of the present disclosure, a computer-implemented method for training a model using a central node and a plurality of client nodes includes, at one or more of the plurality of the client nodes: receiving a set of model parameters and an initial seed from the central node; determining an update direction based on the initial seed; computing a scalar reflecting a sign and a size of an approximation of a projection of a gradient of a loss function on the update direction, using the set of model parameters; sending the scalar of the approximated gradient projection to the central node; receiving a model update scalar from the central node; and updating the set of model parameters in the update direction based on the model update scalar.

The method can be used in any kind of distributed scenarios, regardless of the ownership of data and devices being centralized or decentralized, as long as the training topography is the same - a central node and a set of client (worker) nodes. The distributed scenario can be a federated scenario. The presented method addresses various concerns related to privacy, security, and data centralization.

The central node, also referred to as the federator or central server in federated learning, can orchestrate the learning process. It can initiate the training by sending the current model to the client nodes and aggregating the updates received from a subset of all of them. The central node can be responsible for ensuring the integrity and efficiency of the learning process, implementing mechanisms to optimize communication and/or protect privacy.

The plurality of client nodes may be the decentralized entities that hold their own local training data. These nodes can perform computations on their training data and share model updates, in the form of gradients, rather than the data itself. This approach can significantly enhance privacy and security, as sensitive information cannot leave the client node.

An initial phase of this method includes a first step of receiving a set of model parameters and an initial seed from the central node. The set of model parameters may reflect characteristics of the model. For example, if the model is a neural network model, the set of model parameters may comprise the weights and biases of the set of model parameters. The seed may be shared between the central node and client nodes. The seed may be a random seed, including but not limited to a random piece of text or a random number that can be used to synchronize the pseudo-random number generators (PRNG) across client nodes and the central node. Preferably, central node and client nodes have a same PRNG. The random seed thus allows the central node and client nodes to have the same set of random values without needing to transmit the random values to each other.

The initial step needs to be executed only once in a training procedure. At this step, the model parameters can be transmitted in full. However, as this is a step to be taken only once throughout the entire process, the impact on overall transmission load is small. To further save communication costs during the initialization phase, it is possible to generate the same random initializations at the federator and the clients' by using a common seed. In that way, the same random weights can be generated and only the architecture of the model has to be communicated.

The initialization step is followed preferably by an iterative execution of the training steps, which can be referred to as training phase. The update direction is determined based on the initial seed. After receiving the initial seed, a client node can set the initial seed as the seed in its own PRNG. In some cases, if steps of the training phase are iterative, the client node can construct a current seed for each iteration. For example, the current seed can be the initial seed followed by the current repetition number and the number of scalars to be communicated. With the same initial number, a current seed constructed by each client node can stay unchanged for each iteration. Thus, values sampled from each client node's PRNG can be the same. A vector (i.e., the update direction) can be determined.

After determining the update direction, the client nodes can compute a scalar reflecting a sign and a size of an approximation of a projection of a gradient of a loss function on the update direction. Specifically, the size maybe the norm of the approximated projection of the gradient and the sign is positive if the projection is in the same direction as the update direction and negative if the projection is in the opposite direction as the update direction. The federator can determine a learning rate which determines how much to adjust the model parameters in a specific update direction based on the aggregated scalar (see below). For example, the Adam optimizer may be used. Each participating client node may send the scalar it computed to the central node and receive the model update scalar from the central node to update the set of model parameters. In preferred embodiments, a client node can run multiple computations in multiple update directions and transmit the corresponding multiple scalars to the federator in one message.

In this phase, the central node can utilize the scalars sent by the client nodes to update the model parameters of the model. Specifically, there may be a plurality of update directions. The central node can also transmit back the updated model to the client nodes so that these steps can be repeated. In particular, these steps can be repeated a number of times, until the model achieves good accuracy or until one or more convergence criteria are met.

The presented method can allow client nodes to send approximations of their gradients by using random linear projections. High communication efficiency can be achieved by utilizing a shared seed concept. As a result, client nodes only need to send k real numbers (scalars), for a parameter k > 0, instead of high-dimensional vectors. In addition, this can be coupled with a robust aggregation technique specifically tailored to the zero-order optimization context. Furthermore, this method can achieve a high accuracy in the presence of Byzantine clients.

In a further implementation of the method according to the first aspect, the determining the update direction based on the initial seed may include constructing a current seed for each iteration during training the model based on the initial seed; designating the current seed for a pseudo-random number generator, PRNG; sampling a PRNG result from the PRNG; and generating the update direction based on the PRNG result.

In a further implementation of the method according to the first aspect, the current seed may be the same in each iteration during training the model.

A single seed value can be transmitted from the central node to the client nodes at the start of the initial phase. During each iteration, the current seed can be the same. This enables every client node to independently reconstruct update directions, dismissing the need for direct transmission from the central node. The seed can also be used to synchronize the pseudo-random number generation (PRNG) across client nodes and the central node. That allows the central node and client nodes to generate the same set of random values without needing to transmit the information to each other. The use of a shared seed can achieve a much better communication efficiency.

Furthermore, different variants of PRNGs (apart from uniform) can be suited for generating the random projections. There is no reason to limit this approach to a specific random number generator. Which randomness is most suitable can be application-specific and depends on the dataset and model used, although the proposed method may always be a preferred example.

In a further implementation of the method according to the first aspect, the computing the scalar of the approximation of the projection of the gradient of the loss function on the update direction may include determining the gradient using backpropagation; and projecting the gradient on the update direction to obtain the scalar of the approximation of the gradient projection.

This training method is capable of reducing communication between the central nodes and the client nodes, and vice-versa, by sending only a limited number of scalars per iteration. This method can use backpropagation, but project the calculated gradient on the update direction generated by the current seed to obtain the scalar of the approximation of the gradient projection. The result can be a scalar, which can be the only information necessary to be communicated. To achieve better performances, this step can be repeated for multiple random projections ($k$) in a plurality of update directions, hence more than one scalar to be transmitted. While the gradient projection approach requires to calculate the true gradient through backpropagation, it is more computationally efficient *if k* is big.

In a further implementation of the method according to the first aspect, the computing the scalar of the approximation of the projection of the gradient of the loss function on the update direction may include evaluating the loss function using the set of model parameters perturbed into the update direction.

In a further implementation of the method according to the first aspect, the evaluating the loss function using the set of model parameters perturbed into the update direction may include perturbing the set of model parameters; updating the set of model parameters to a set of perturbed model parameters; calculating a first perturbed value and a second perturbed value based on the set of perturbed model parameters; and determining the approximated gradient of the loss function in the update direction based on the first perturbed value and the second perturbed value.

The client nodes can compute an approximation of the true gradient by random perturbations of the model. The random perturbations are sampled by the client nodes at each iteration and used to compute an approximation of the true gradient, update the local model, and send the updated model to the central node.

This approach (e.g., Zero-order Optimization) can be pursued if computing the gradients is impossible, e.g., in black-box optimization or when the objective is not differentiable. The versatility of zero-order optimization as a memory-efficient technique allows the fine-tuning of billion-parameter models, while only using a fraction of the memory required by the first-order counterparts. The federated counterpart can be made efficient in terms of communication while effectively resisting to Byzantine behavior of a fraction of the clients.

In addition, this approach may not need backpropagation. Backpropagation requires more memory resources compared to the approximation approach where no backpropagation is required. The $k$ scalars are obtained through model perturbations in a random direction instead of the projection onto the true gradient.

In a further implementation of the method according to the first aspect, the model may include at least one of Linear Regression, Logistic Regression, Support Vector Machine, Decision Tree, Ensemble Methods, Generalized Linear Model, Neural Networks, Deep Learning Model, and fine-tuning Large Language Models.

The method can be utilized for the training of any machine learning model that relies on gradient descent, this includes Neural Networks, Linear Regression, Logistic Regression, Support Vector Machines (SVMs), Decision Trees and Ensemble Methods (like Gradient Boosting), Generalized Linear Models (GLMs), Deep Learning Models (beyond standard neural networks, like CNNs and RNNs), and/or fine-tuning of Large Language Models.

According to a second aspect of the present disclosure, a computer-implemented method for orchestrating training a model using a central node and a plurality of client nodes, includes, at the central node: sending a set of model parameters and an initial seed to the plurality of client nodes; and iteratively executing, until a preset condition is satisfied. The iteratively executing, until a preset condition is satisfied, includes receiving a plurality of scalars of approximated gradient projections from the plurality of client nodes; aggregating them to obtain a model update scalar; and sending the model update scalar to the plurality of client nodes.

The method can be adapted to account for partial client node participation. In some cases, the learning algorithm may not suffer from the occasional participation of client nodes instead of each client node computing a partial gradient at each iteration. While this approach often may not hurt the performance of the model, it can bring significant communication savings on top of the efficiency provided by the situation with participation of each client node. To ensure this, the central node can keep track of all gradients a client node needs to update its local model to the global state after it did not contribute for a certain number of global iterations. More specifically, the central node can send the averaged gradients for each iteration and each projection together with the information of which of those belong to which iteration. This information may be sufficient to bring all client nodes up to speed in every iteration, even if some of them did not participate in any number of preceding iterations.

In a further implementation of the method according to the second aspect, the method may further include computing the updated model at the central node at every iteration or at the end.

In a further implementation of the method according to the second aspect, the method may further include determining the update direction of the model based on the initial seed. The determining the update direction of the model based on the initial seed may include constructing a current seed for each iteration during training the model based on the initial seed; designating the current seed for a pseudo-random number generator, PRNG; sampling a PRNG result from the PRNG; and generating the update direction based on the PRNG result.

In a further implementation of the method according to the second aspect, the current seed may be the same in each iteration during training the model.

A single seed value can be transmitted from the central node to the client nodes at the start of the initial phase. During each iteration, the current seed can be the same. This enables every client node to independently reconstruct update directions, dismissing the need for direct transmission from the central node. The seed can also be used to synchronize the pseudo-random number generation (PRNG) across client nodes and the central node. That allows the central node and client nodes to generate the same set of random values without needing to transmit the information to each other. The use of a shared seed can achieve a much better communication efficiency.

Furthermore, different variants of PRNGs (apart from uniform) can be suited for generating the random projections. There is no reason to limit this approach to a specific random number generator. Which randomness is most suitable can be application-specific and depend on the dataset and model used, although the proposed method may always be a preferred example.

In a further implementation of the method according to the second aspect, the aggregating the plurality of the scalars of the approximated gradient projections to obtain the model update scalar may be achieved by an aggregation rule.

The aggregation rule may include but not be limited to the trimmed mean. This choice of function can be made more general, in the sense that any kind of robust aggregation function can be used to replace the trimmed mean with no conceptual loss. The aggregation rules can be used to ensure robustness against client nodes who adversarially deviate from the described protocol.

In a further implementation of the method according to the second aspect, the preset condition may include convergence of the model and/or a desired performance metric.

The iteration may continue until the model achieves good accuracy. For example, steps repeat until the model converges and/or meets the desired performance metrics.

According to a third aspect of the present disclosure, a client node is provided. The client node is configured to perform the method of any implementation according to the first aspect.

According to a fourth aspect of the present disclosure, a central node is provided. The central node is configured to perform the method of any implementation according to the second aspect.

According to a fifth aspect of the present disclosure, a distributed machine learning system includes: a plurality of client nodes, wherein the plurality of client nodes is configured to perform the method of any implementation according to the first aspect; and a central node, wherein the central node is configured to perform the method of any implementation according to the second aspect.

In a further implementation of the system according to the third aspect, communication between the plurality of client nodes and the central node may be secured by end-to-end encryption.

The end-to-end (public key) encryption can be applied between each client and the federator to ensure privacy of all communication against an eavesdropper.

According to a sixth aspect of the present disclosure, a computer-readable storage medium storing program code is provided. The program code includes instructions that when executed by a processor carry out the method of any implementation according to the first aspect or the second aspect.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

## BRIEF DESCRIPTION OF THE DRAWINGS

The present disclosure is further described in terms of exemplary embodiments. These exemplary embodiments are described in detail with reference to the drawings. The drawings are not drawn to scale. These embodiments are non-limiting exemplary embodiments, in which like reference numerals represent similar structures throughout the several views of the drawings, and wherein:

FIG. 1 is a schematic diagram of an exemplary Neural Network Model according to some embodiments of the present disclosure;

FIG. 2 is a schematic diagram of an exemplary federated learning process according to some embodiments of the present disclosure;

FIG. 3 is a flow chart illustration a process for training the model according to some embodiments of the present disclosure;

FIG. 4 is a schematic diagram of an exemplary iteration of communication-efficient and byzantine-resilient federated learning using the proposed procedure with 3 clients according to some embodiments of the present disclosure;

FIG. 5a is a graph illustrating impact of sample size $k$ over the communication cost according to some embodiments of the present disclosure;

FIG. 5b is a graph illustrating impact of sample size $k$ over the number of steps according to some embodiments of the present disclosure;

FIG. 5c is a graph illustrating effect of Byzantine client behaviors according to some embodiments of the present disclosure;

FIG. 6 is a graph illustrating effect of Byzantine clients on the convergence speed of CYBER-0 according to some embodiments of the present disclosure;

FIG. 7 shows a graph contrasting Byzantine and Non-Byzantine Scenarios Across Diverse Data Distributions with RoBERTa-large on TREC and SNLI according to some embodiments of the present disclosure.

## DETAILED DESCRIPTION

The following description is presented to enable any person skilled in the art to make and use the present disclosure and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown but is to be accorded the widest scope consistent with the claims.

The terminology used herein is for the purpose of describing particular example embodiments only and is not intended to be limiting. As used herein, the singular forms "a", "an", and "the" may be intended to include the plural forms as well, unless the context clearly indicates otherwise. It will be further understood that the terms "comprise", "comprises" and/or "comprising", "include", "includes", and/or "including" when used in this specification, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operation and functions of the related elements of structure and the combination of portions and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments of the present disclosure. It is to be expressly understood, the operations of the flowchart may be implemented not in order. Conversely, the operations may be implemented in inverted order, or simultaneously. Moreover, one or more other operations may be added to the flowcharts. One or more operations may be removed from the flowcharts.

In order to make the purpose, technical solution, and advantages of the present disclosure clearer, the present disclosure will be further described in detail below with reference to the accompanying drawings and embodiments. It should be understood that the specific embodiments described herein are merely illustrative of the present disclosure and are not intended to limit the present disclosure.

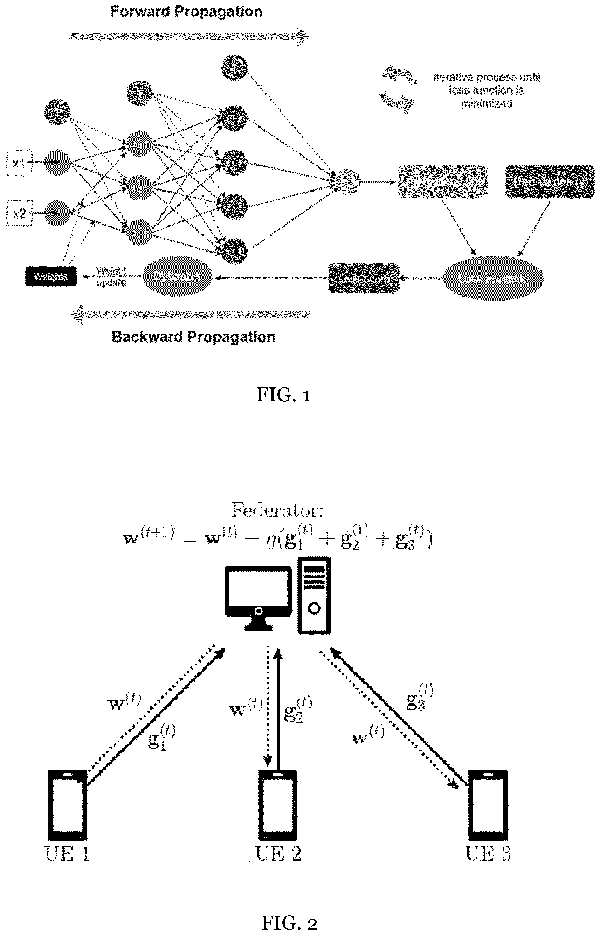

FIG. 1 is a schematic diagram of an exemplary Neural Network Model according to some embodiments of the present disclosure. Neural networks are a cornerstone of artificial intelligence, inspired by the biological neural networks that constitute animal brains. Neural networks are computational models designed to recognize patterns in data. They are capable of learning and making decisions or predictions based on input data.

The architecture of a neural network refers to its structure, specifically how neurons (also known as nodes) are organized. A typical neural network comprises an input layer, one or more hidden layers, and an output layer. The input layer can receive the raw input data, such as x1 and x2 in FIG.1. Each neuron in the input layer can represent a feature of the input data. The hidden layers are layers between the input and output layers. For example, there are three hidden layers in FIG.1. They can perform computations and transformations on the inputs received from the previous layer. Each hidden layer can receive a weighted sum $z$ of the input data, and transform $z$ to generate its output by an activation function $f$ in FIG.1. The complexity and capacity of a neural network to learn can be largely determined by the number and size of its hidden layers. The output layer can provide the output of the neural network, such as the Predication y' in FIG.1. The output can represent a classification label, a continuous value, or any other form of prediction.

Weights and biases can be the parameters of a neural network. They can play a critical role in the network's ability to make accurate predictions. Weights are values that scale the input data. They can determine the importance of each input in the computation performed by the neurons. Biases are values that are added to the weighted input before applying the activation function. Biases can help the model make better fits to the data by adjusting the output along the value axis. Both the weights and the biases can be combined in a model vector w describing the entire neural network state.

Training a neural network can involve adjusting its weights and biases based on the differences between the actual output and the desired output, such as the Predictions y' and True Values $y$. This process can use a dataset of known inputs and outputs to teach the network how to make predictions. Training can occur over multiple iterations, or epochs, through a process called gradient descent. The goal is to minimize the error, or loss, which measures the difference between the predicted output and the actual output. By minimizing the loss, the neutral network can learn to make more accurate predictions.

Backpropagation is a key mechanism in training neural networks. It can involve the calculation of the gradient of the loss function with respect to each weight in the network, which can inform how the model should adjust its weights to minimize the loss. The process can be summarized in the following steps:

1. Forward Propagation: The input data is passed through the network, layer by layer, until the output layer is reached.

At each neuron, the weighted sum $z$ of the inputs is calculated and passed through an activation function $f$.

2. Loss Calculation: The output of the network (e.g., the Predictions $y'$) is compared to the desired output (e.g., the True Values $y$), and the difference is quantified using a loss function, such as the mean squared error (MSE) for example:

$$L = \frac{1}{N}\sum_{i=1}^{N}(y_i - \hat{y}_i)^2$$

, where $L$ is the loss, $N$ is the number of samples, $y_i$ is the actual value, and $\hat{y}_i$ is the predicted value.

3. Backward Propagation: The gradient of the loss function with respect to each weight can be computed to determine how the weights need to be adjusted. This can be done by applying the chain rule of calculus, which can be expressed as:

$$\frac{\partial L}{\partial w} = \frac{\partial L}{\partial \hat{y}} \cdot \frac{\partial \hat{y}}{\partial z} \cdot \frac{\partial z}{\partial w}$$

, where $z$ is the weighted sum of inputs to a neuron, and $w$ represents the weights. The partial derivative of the loss w.r.t. a model parameter is referred to as a gradient $g$. All gradients of the model parameters can be stacked to obtain the gradient vector $g_i$, similar to the model vector $w$. Both vectors have the same dimension.

4. Weight Update: Finally, the weights can be updated in the opposite direction of the gradient to minimize the loss. The update rule is given by:

$$w_{new} = w_{old} - \eta \cdot \frac{\partial L}{\partial w}$$

, where $\eta$ is the learning rate, a small positive scalar determining the size of the step taken in the direction opposite to the gradient.

By iteratively applying these steps, the neural network can learn to adjust its weights and biases to minimize the error between its predictions and the actual outputs, effectively learning from the training data. Thus, neural networks are powerful tools for pattern recognition and prediction. Their effectiveness depends on their architecture, the adjustment of weights and biases, and the processes of training and backpropagation. By learning from data, neural networks can make complex decisions, making them invaluable in a wide range of applications.

FIG. 2 is a schematic diagram of an exemplary federated learning process according to some embodiments of the present disclosure. Federated Learning is a distributed machine learning approach that enables a model to be trained across multiple devices or servers, each holding their own local data, and a central server, called the federator. Rather than transferring the data itself, the devices (called clients) collaboratively update and improve a central model by exchanging model parameters. Federated Learning can address various concerns related to privacy, security, and data centralization.

Federated Learning can involve a distributed system where multiple client nodes collaborate to train a shared model under the coordination of a central server or federator node. The general process includes the following steps:

1. The federator node can initialize the shared model $w^{(0)}$ and distribute it to the client nodes (the superscript denotes the iteration index). Since the scheme repeats at each iteration, the iteration index may be dropped when later describing procedure. Also note that individual model parameters may later be subscripted by $j$, i.e., $w_j$.

2. $m$ can be the number of clients in the system. Each client node $i$ can train the model locally on its data, thus obtaining a gradient on its data, thus obtaining a gradient $g_i$, which it can use to update the current model with its local information. The local model results as $w_i^{(t+1)} = w^{(t)} - \eta g_i^{(t)}$. Here, $w_i$ is the vector that encapsulates all the parameters $w_j$ of the model computed by client node $i$.

3. The client nodes can send the model updates, specifically in terms of gradients of the model's parameters (weights and biases), back to the federator node. These gradients represent the direction and magnitude of changes needed to improve the model based on the local data. Note there is no difference whether clients send the updated model or the gradients, since the federator can always obtain $w_i^{(t+1)}$. In the present disclosure, the case where clients send the gradients $g_i^{(t)}$ is considered.

4. The federator node can aggregate the updates of all clients to improve the shared model. The most basic form of aggregation is simply averaging the updates of each parameter (weight or bias) across the different values sent by the clients, i.e., $w^{(t+1)} = w^{(t)} - \eta \sum_i g_i^{(t)}$, where the sum is taken of all clients' gradients.

5. The updated model can be then sent back to the client nodes, and the process repeats until the model converges and/or meets the desired performance metrics.

FIG. 2 is an exemplary iteration of federated learning with 3 clients. The three clients shown in FIG. 2 do not constitute a limitation on the number of clients.

The federator node, often also referred to as the central server, can orchestrate the learning process. It initiates the training by sending the current model to the client nodes and aggregates the updates received from them. The federator node is responsible for ensuring the integrity and efficiency of the learning process, often implementing mechanisms to optimize communication and protect privacy.

Client nodes are the decentralized entities that hold their own local data. In Federated Learning, these nodes can perform computations on their data and share model updates, in the form of gradients, rather than the data itself. This approach can significantly enhance privacy and security, as sensitive information does not leave the node.

The aggregation function is a critical component of Federated Learning. It can combine the updates received from the client nodes to improve the shared model. A common aggregation function is the Federated Averaging algorithm, which computes the weighted average of the updates. The aggregation function plays a vital role in ensuring the model effectively learns from the distributed data while addressing challenges such as non-IID (independently and identically distributed) data across nodes. IID data refers to the setting in which the data held by the clients follows the same distribution. In contrast, non-IID data means that the data held by the clients follows different distributions.

In Federated Learning, communication between the federator node and client nodes typically involves the exchange of model parameters or gradients. The communication format can be efficient and secure, often employing compression techniques and encryption to minimize bandwidth usage and protect the transmitted data.

Federated Learning (FL) faces several key challenges, such as heterogeneity across clients' data maintaining the privacy of the clients' data, security against Byzantine clients and communication efficiency.

Federated Learning inherently enhances privacy by design, as the raw data remains on the client nodes. However, privacy concerns still exist, such as the potential for model updates to reveal information about the underlying data. Techniques like differential privacy are often employed to mitigate such risks.

Security challenges in Federated Learning include protecting the model and updates from adversarial attacks. Security against Byzantine clients, i.e., clients deliberately corrupting their computation to disrupt the process, is paramount. If undetected, only one Byzantine client inserting errors is enough to prevent the learning algorithm from converging. Secure aggregation protocols and robust authentication mechanisms are critical to safeguarding the federated learning process. Trimmed mean can be used to solve the security issue. That operates as follows: the federator observes the gradient of all client nodes. For each coordinate of the model, the federator sorts the gradient values received from all the clients. For a fixed fraction $\beta$ of malicious clients to be tolerated (known to the federator), the federator discards the largest and smallest $\beta m$ values of the gradients. The remaining values can be used to compute the average gradient.

Given the potentially large number of client nodes, memory and communication efficiency are paramount. In FL settings, clients can run backpropagation on their local data and communicate a d-dimensional vector (usually d is in the order of $10^6$-$10^9$) to the federator, making communication and computation two crucial bottlenecks, especially in settings where the clients are edge devices with limited computation and communication capabilities and energy constraints. Strategies to reduce the size of model updates and the frequency of communication are essential for scaling Federated Learning to many nodes with limited bandwidth. The following two approaches can reduce the communication cost in federated learning, which target to compress the gradients without using any, or only a few, relevant information about the full gradients.

> 1. Zero-order: the clients can compute an approximation of the true gradient (the one computed through backpropagation) by random perturbations of the model, explained in more detail below. The random perturbations are sampled by the clients at each iteration and used to compute an approximation of the true gradient, update the local model, and send the updated model to the federator.
> 2. Gradient projection: Opposed to computing approximations of the gradient, one can compute the true gradient and project it onto random directions as proposed for distributed learning in a more restrictive setting. Through the use of a shared seed, this approach can be made communication efficient in a federated learning setting.

Federated Learning is a powerful approach to machine learning that addresses key challenges related to privacy, security, and data centralization. By distributing the training process across multiple nodes and aggregating their updates, specifically in terms of gradients, federated learning enables the development of sophisticated models while safeguarding sensitive information.

## 1. Introduction of CYBER-0

The present disclosure introduces CYBER-0, a novel communication-efficient and Byzantine-resilient algorithm within the context of zero-order optimization. Zero-order optimization, i.e., optimization techniques that require no gradient computation, has seen significant traction in recent years. Zero-order optimization alleviates both computation and communication costs by allowing clients to send approximations of their gradients using random linear projections as (i) it does not require backpropagation; and (ii) it allows significant compression of the communicated vector.

While achieves communication efficiency through reduced frequencies of model exchanges, significant communication cost savings can be achieved by a novel bi-directional shared seed concept. As a result, clients and the federator can only send *k real numbers,* for a parameter $k > 0$, instead of high-dimensional vectors. This can be coupled with an effective robust aggregation technique specifically tailored to the zero-order optimization context.

The effectiveness of CYBER-0 can be validated through extensive experiments. For MNIST, the same accuracy can be observed with a hundred-fold saving in communication. In fine-tuning Large Language Models (LLMs), CYBER-0 can achieve high accuracy in the presence of Byzantine clients, together with a million-fold saving in terms of communication compared to uncompressed transmission. The superiority of CYBER-0 in fine-tuning LLMs is evident in its ability to handle problem domains with inherently low intrinsic dimensionality, making zero-order optimization (and thus CYBER-0) a suitable optimization technique. The fast convergence of CYBER-0 aligns with those findings. Furthermore, it was infeasible to compare to state-of-the-art robust FL schemes that require backpropagation as the simulations in accordance with the prior art overloaded the memory of the GPUs of type Nvidia GeForce RTX 4090; highlighting the memory efficiency of CYBER-0. In addition, it can be theoretically proved that CYBER-0 converges under the assumption of strong convexity.

The present disclosure is the first work that simultaneously addresses security and communication/memory efficiency in FL through zero-order methods; offering a unique advantage, particularly in environments where first-order gradient information is not available or not computationally feasible due to memory-constrained client devices.

## 2. Problem Setting

There are notation and conventions used in the present disclosure.

Notation. Vectors are represented by boldface letters, *e.g., z* and sets are denoted by calligraphic letters, *e.g.,* $\mathcal{W}$. The $L_2$ norm of a vector w is denoted by $\|w\|_2$. The inner product of vectors *z* and *w* is represented interchangeably by $\langle z, w \rangle$ and $z^\top w$, chosen to enhance the clarity of exposition. The i-the coordinate of a vector *w* is denoted by $w^{(i)}$. The natural logarithm is represented by log. $[n] \triangleq \{1, \cdots, n\}$ and $\mathbb{S}^d$ can be defined as the set of unit-norm vectors in $\mathbb{R}^d$, i.e., $\mathbb{S}^d = \{x \in \mathbb{R}^d : \|x\|_2 = 1\}$. Given a convex set $\mathcal{W} \subseteq \mathbb{R}^d$, the Euclidean projection of a vector $w \in \mathbb{R}^d$ on $\mathcal{W}$ is $\Pi_{\mathcal{W}}(w) \triangleq \operatorname{argmin}_{w' \in \mathcal{W}} \|w' - w\|_2^2$. The operation of uniformly sampling a vector *z* from $\mathbb{S}^d$ can be denoted as $z \sim \mathbb{S}^d$. Similarly, sampling independently and uniformly a set of vectors $Z = \{z_1, z_2, ..., z_n\}$ is denoted as either $Z \sim \mathbb{S}^d$ or $z_1, z_2, \ldots, z_n \sim \mathbb{S}^d$.

Federated Learning. The model can comprise a network comprising of a federator (also referred as a central node) and *m* clients (also referred as client nodes), denoted by the indices $\{1, 2, \ldots, m\}$. Each client *i* has a set of data samples $\mathcal{D}_i \triangleq \{\gamma^{i,1}, \ldots, \gamma^{i,|\mathcal{D}_i|}\} \subseteq \Gamma$, where $\Gamma$ is the data space. Let $\mathcal{D} \triangleq \cup_{i \in [m]} \mathcal{D}_i$ be the global dataset. The loss function, denoted by $f(w; \gamma)$, is defined with respect to the parameter vector $w \in \mathcal{W} \subseteq \mathbb{R}^d$ and a data vector $\gamma \in \Gamma$.

The federator can exchange messages with clients over multiple rounds with the goal of minimizing the statistical loss $\hat{F}(w) = \frac{1}{|\mathcal{D}|} \sum_{\gamma \in \mathcal{D}} f(w, \gamma)$. At training step $t \geq 0$, the federator can send a model vector $w^t$ to the clients. Each client i can then compute an update message $g_i^t$ based on the federator's model vector $w^t$ and its local dataset $\mathcal{D}_i$ and send the result back to the federator. Finally, the federator can update the model to $w^{t+1}$ as a function of $w^t$ and $\{g_i^t : i \in [m]\}$. At the end of training step $\Gamma$, the federator can output its learned model $w^T$.

Adversarial Model. Byzantine clients behave as in Definition 2.1. A fraction $\alpha m$ (unknown to the federator), $0 \leq \alpha < 1/2$, of the clients are Byzantine. Byzantine clients' indices are denoted by $\mathcal{B}$.

Definition 2.1 (Attack Model). A Byzantine client $b \in \mathcal{B}$ has complete knowledge of the vectors transmitted by all other clients to the federator at each training step. Given this knowledge, it may send arbitrary vectors to the federator, denoted as *, aiming to disrupt the optimization procedure.

### 3. Robust Zero-Order Federated Learning

The present disclosure introduces CYBER-0, a Byzantine-resilient federated zero-order optimization. CYBER-0 builds on the principles of MeZO, a memory-efficient centralized algorithm. In addition to providing Byzantine resilience, CYBER-0 can significantly improve the communication efficiency compared to FedZO, the FL counterpart of MeZO. CYBER-0 is given in Algorithm 1 and is explained next.

**Algorithm 1** CYBER-0

**Input:** $w_0 \in \mathcal{W}$ is the initial model parameter vector, $\beta$ is the trimmed mean factor, $\eta$ is the learning rate, $\mu$ is the perturbation step, $k$ is the number of samples per estimate and $T$ is the total number of learning steps.

**for** $t = 0$ **to** $T$ **do**

    ▶ **Federator**

       Samples $Z^t = \{ z_1^t, z_2^t, \ldots, z_k^t \} \sim \mathbb{S}^d$

       Distributes $w^t = w^t$ to each client

    **for** $i = 0$ **to** $m$ **in parallel do**

      ▷ **client** $i$

        **for each** $z_r^t \in Z^t$ **do**

          Compute and send $g_i(w^t, z_r^t)$ to federator, cf. Definition of Zero-Order estimate in the following context

        **end for**

    **end for**

    ▶ **Federator**

       $\hat{g}^t \leftarrow \frac{1}{k} \sum_{r=1}^{k} \hat{g}_\beta(w^t, z_r^t) z_r^t$

       $w^{t+1} \leftarrow \Pi_{\mathcal{W}}(w^t - \eta_t \hat{g}^t)$

**end for**

The successful combination of components of CYBER-0 yields subtle but significant complexities. Extending centralized zero-order algorithms to Byzantine-resilient FL requires ensuring that the choice of the vectors $z_1, \cdots, z_k$ does not compromise resiliency and still allows convergence. In addition, proving that the robustness of a trimmed mean operation, meant to operate on the coordinates of gradient vectors, extends to the zero-order estimator requires novel theoretical tools. Further challenges include practical validation of the proposed algorithm and investigating zero-order fine-tuning in federated large language models. The following provides a formal explanation of the main concepts and the algorithm.

Definition 3.1 (Zero-Order estimate). For a given $\mu \geq 0$, a vector $z \in \mathbb{S}^d$ and a loss function f$(\mathbf{w}, \gamma)$, the *single-sample zero-order estimate* of the gradient $\nabla f(\mathbf{w}, \gamma)$ is defined as

$$g(w, z, \gamma, \mu) = \begin{cases} d \frac{f(w + \mu z; \gamma) - f(w - \mu z; \gamma)}{2\mu} z, & \text{for } \mu > 0, \\ d \langle \nabla f(\mathbf{w}, \gamma), z \rangle z, & \text{for } \mu = 0. \end{cases}$$

As considering a fixed $\mu$, $\mathbf{g}(w, \mathbf{z}, \gamma)$ instead of g$(w, \mathbf{z}, \gamma, \mu)$ is written.

To simplify notation, for each client $i \in [m]$ and each $j \in [| \mathcal{D}_i |]$, the client partial estimate is defined as

$g_{i,j}(w, z) \triangleq g(w, z, \gamma^{i,j})$ and the *client estimate* as $g_i(w, z) \triangleq \frac{1}{|\mathcal{D}_i|} \sum_{j=1}^{|\mathcal{D}_i|} g_{i,j}(w, z)$. The norms $g_i(w, z) \triangleq \|g_i(w, z)\|_2$ and $g(w, z, \gamma, \mu) \triangleq g(w, z, \gamma, \mu)$ are defined.

Definition 3.2 (Trimmed Mean). Given $0 \leq \beta < 1/2$ and a multiset $X = \{x_1, x_2, \cdots, x_m\}$, the trimmed mean operation is defined as $\mathrm{TrMn}_\beta\{X\} \triangleq \frac{1}{m-2\lfloor\beta m\rfloor} \sum_{x \in X_\beta} x$, where $X_\beta$ is obtained by removing the largest and smallest $\lfloor\beta m\rfloor$ elements from X.

Computation Procedure. At training step $t$, the federator shares the model $w^t$ and $k$ vectors $z_1^t, \ldots, z_k^t \sim \mathbb{S}^d$ with the clients. Client $i$ computes $g_i(w^t, z_r^t)$ and sends $g_i(w^t, z_r^t)$, $r \in [k]$, to the federator. Byzantine clients send arbitrary vectors denoted by *. The robust aggregation proceeds as follows. For each $r \in [k]$, the federator first computes $\hat{g}_\beta(w^t, z_r^t)$ as

$$\hat{g}_\beta(w^t, z_r^t) \triangleq \mathrm{TrMn}_\beta\left\{\left\{g_i(w^t, z_r^t) : i \in [m] \setminus \mathcal{B}\right\} \cup \{* : i \in \mathcal{B}\}\right\}.$$

Next, the federator computes the gradient estimate $\hat{g}^t = \frac{1}{k}\sum_{r=1}^k \hat{g}_\beta(w^t, z_r^t)z_r^t$ and updates the model as $w^{t+1} = \Pi_{\mathcal{W}}(w^t - \eta_t\hat{g}^t)$ for a given learning rate $\eta_t$. To reduce the communication cost, the federator can only broadcast $\hat{g}_\beta(w^t, z_r^t), \forall r \in [k]$ and each client reconstruct $w^{t+1}$ individually.

### 3.1 Properties of CYBER-0

The algorithm can exhibit Byzantine resilience and communication and memory efficiency. Those are notable properties contributing to its effectiveness in federated learning.

Byzantine Resilience. A key component of the robust aggregation is that it aligns with the compression mechanism used by the clients. The transmitted values can be perceived as a linear k-dimensional compressed representation of the gradient. This format is inherently amenable to scalar robustness procedures, such as the trimmed mean.

Communication Efficiency. CYBER-0 can compress $d$-dimensional vector into $k$ real values, offering low communication costs. At first glance, CYBER-0 appears to rely on transmitting the $d$-dimensional vectors $z_1^t, \ldots, z_k^t$ at each training step. However, this overhead is efficiently mitigated through a simple yet effective strategy: utilizing a shared common seed among clients and the federator. The federator can disseminate this seed, which is then used by the clients to sample the perturbation directions $z_1^t, \ldots, z_k^t$ in a coordinated manner. Local updates can further reduce the communication cost. For clarity of exposition, the present disclosure provides CYBER-0 with local updates in Algorithm 4 in the section below on experimental details, together with corresponding numerical experiments.

Memory Efficiency. By using Zero-order approximation, which inherently does not necessitate backpropagation, CYBER-0 can save significantly on memory (by up to a factor of 12) compared to traditional training methods relying on backpropagation. Furthermore, CYBER-0 can adopt in-place perturbations on model parameters, a technique also used in MeZO, to further reduce memory usage.

Under a different setting, $\mu = 0$, CYBER-0's gradient estimates are computed by projecting the true gradient along different directions. This can remove the memory efficiency property in exchange for better computational efficiency, since instead of calculating $2k$ function evaluations, only a single gradient and k projection calculations are needed.

CYBER-0 is the first application of Byzantine resilience in zero-order compressed information scenarios. In contrast, for any case other than $k = 1$, coordinate-wise methods do not allow the same compression mechanism to occur in the federator-to-client communication.

### 3.2 Training procedures

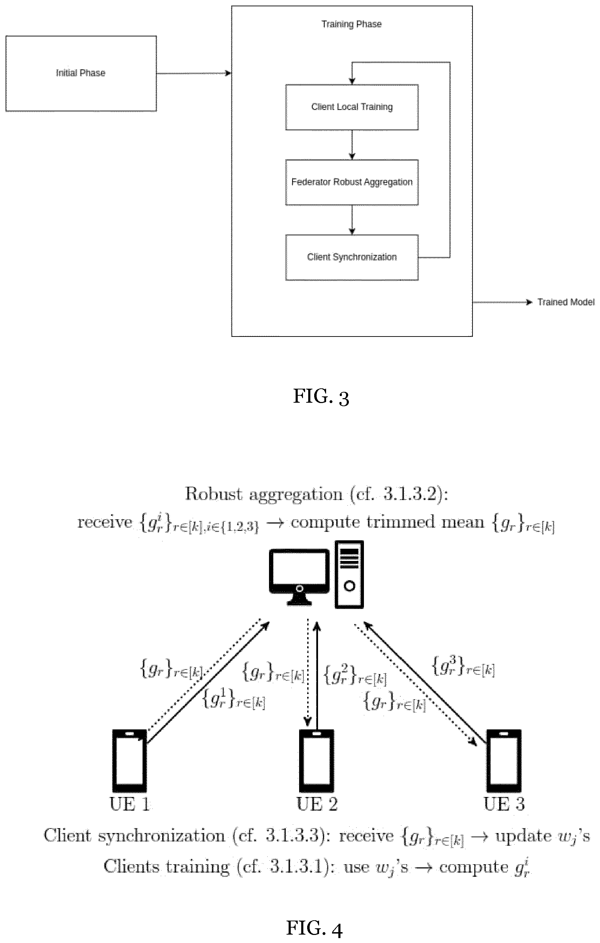

FIG. 3 is a flow chart illustration a process for training the model according to some embodiments of the present disclosure. The core of the present disclosure is described by a training procedure capable of reducing communication between clients and federator, and vice-versa, by sending only a limited number of scalars per round. There are two variants of communication-efficient methods, enabled through the use of a shared seed between the federator and the clients. One variant (later referred to as $\mu = 0$) uses backpropagation, but projects the calculated gradient vectors $\mathbf{g}_i$ onto random vectors generated by a common seed. The result is a scalar, which is the only necessary to be communicated. To achieve better performances, this can be repeated for multiple random projections (later referred to as $k$), hence more than one scalar to be transmitted. While the gradient projection approach requires to calculate the true gradient through backpropagation, it is more computationally efficient if $k$ is big. However, backpropagation requires more memory resources compared to the approximation approach (referred to as $\mu > 0$) where no backpropagation is required. This approach can also be pursued if computing the gradients is impossible, e.g., in black-box optimization or when the objective is not differentiable. Here, the $k$ scalars can be obtained through model perturbations in a random direction instead of the projection onto the true gradient $\mathbf{g}_i$. The byzantine-resilient aggregation of the clients' results can be then conducted on the $k$ scalars of each client. The procedure is described in detail in the following.

### Input Parameters

These parameters are defined by the federator and used by all clients. They are as follows:

$\mathbf{w}^{(0)}$ represents the initial set of parameters of a generic neural network. In other words, $\mathbf{w}^{(0)}$ the initial values of the weights and biases in all of the layers of the network. These values are mathematically represented a single, $d$-dimensional, vector (the neural network has, therefore, a total of $d$ parameters in total, when accounting for all layers).
$k$ represents the number of scalars to be communicated by each client on each round. This number can be chosen as needed and therefore counts as an input of the procedure.
$\mu$ is the approximation parameter. In practice, it can represent how close of an approximation chosen when deriving the to-be-transmitted scalars. In particular, there are two different variants of the procedure: one for $\mu = 0$ (exact, with backpropagation) and the other for $\mu > 0$ (approximation, without backpropagation). The two different variants have different properties when regarding the memory vs computation efficiency trade-off.
$\beta$ represents the robustness factor. In particular, $\beta$ stands for how many of the sent scalars will be removed in the trimmed mean procedure responsible for bringing robustness to the present solution.
$\eta$ is the learning rate.
s is a random seed (in simpler words, a random piece of text, such as WU1nUA7eM6cX4, or a random number such as 29333444982231150511349542129150) that will be used to synchronize the pseudo-random number generation (PRNG) across clients and the federator. This random seed allows the clients and federators to generate the same set of random values without needing to transmit the information to each other.

### Initial Phase

This phase can be executed only once in a training procedure. In this phase, there are the following steps:

1. The federator can send the seed s to all clients.
2. The federator can send the initial model parameters w(0) (and possibly the architecture of the neural network, e.g., how many layers and the types of each).

There is no direct communication efficiency taking place here. The values are transmitted in full. However, as this is a step to be taken only once throughout the entire process, it will impact no further in costs. To further save communication costs during the initialization phase, it is possible to generate the same random initializations at the federator and the clients' by using a common seed. In that way, the same random weights can be generated and only the architecture of the model has to be communicated.

### Training Phase

In this phase, the federator can utilize the values sent by the clients to update the parameters (weights and biases) of the so-called central model. The federator can also transmit back the new central model to the clients so that this step can be repeated.
In particular, this step can be repeated a number of times, until the neural network model achieves good accuracy, which refers to as "converges". For the description of this phase, it is assumed that the current repetition number is $t$.

This phase can be divided into three parts:

1. Client Local Training
2. Federator Robust Aggregation
3. Client Synchronization

**Client Local Training**

On the local training of each client - fixing client number $i$ - there may be the calculation of an approximate gradient. This calculation, as mentioned in the description of the input parameter $\mu$, can be done in two variations. These two variations are discussed in detail in the following context.

1. For each sample number $r$, from 1 to $k$:

(a) The client can construct a new seed s' by concatenating $s$ with $t$ and with $r$. For example, if $s$ = 1234, $t$ = 10 and $r$ = 2, the new seed s' = 1234-10-2. Each client can do the same independently.

(b) The client sets s' as the seed in its own PRNG module, then iterates over each parameter of their current model $\mathbf{w}^{(t)}$ (each weight and bias value in the current neural network), and does the following (the iteration identifier can be dropped for ease of exposition):

i. If $\mu$ = 0 (with backpropagation):

A. The client uses backpropagation to calculate the model gradient $\mathbf{g}_i$,

B. The client randomly samples $d$ values from its PRNG, using a Gaussian distribution with mean 0 and standard deviation 1, constructing a vector $\mathbf{z_r}$.

C. The client calculates the standard inner product between $\mathbf{g}_i$ and $\mathbf{z_r}$, which is $g_r^i$ .

D. The client sends $g_r^i$ to the federator.

ii. If $\mu$ > 0 (without backpropagation):

A. The client iterates over the model parameters $w_j$ (that is, each weight and bias of the neural network).

B. Then the client samples a different value $z_j$ from its PRNG, using a Gaussian distribution with mean 0 and standard deviation 1, for each model parameter $w_j$ and updates the parameter from $w_j$ to $w_j + \mu z_j$ (adds the random value).

C. The client calculates the error value over its input data, which is denoted by e+

D. The client now modifies each weight and bias to be $w_j - \mu z_j$ (this can be done by subtracting twice $z_j$ from the incremented value).

E. The client calculates the error value over its input data, which is denoted by $e_-$

F. The client calculates the approximation $g_r^i = d\,\frac{(e_+ - e_-)}{2\mu}$ and sends it to the federator.

G. The client resets its local model to the original weights and biases $w_j$ (this can be done by incrementing each value by $z_j$).

By the end of this step, each client has communicated $k$ scalar values to the federator, namely $g_r^i$ from $r$ = 1 to $k$.

**Federator Robust Aggregation**

The federator can receive the different scalars from all the clients and proceeds to aggregate them. It goes as follows:

1. For each sample number $r$, from 1 to $k$:

(a) The federator aggregates all values corresponding to sample $r$ coming from each client, $\{g_r^i\}$ from $i$ = 1 to $m$

(the total number of clients) using a trimmed mean with parameter $\beta$. This means that a fraction of $\beta$ values will be discarded from the top and bottom of the list. The result of the trimmed mean is denoted as $g_r$

(b) The federator constructs a new seed *s' by* concatenating s with *t* and with *r.*

(c) The federator sets *s'* as the seed in its own PRNG module.

(d) The federator iterates over the model parameters $w_j$ (that is, each weight and bias of the neural network).

(e) Then the federator samples a different value $z_j$ from its PRNG, using a Gaussian distribution with mean 0 and standard deviation 1, for each model parameter $w_j$.

(f) The federator modifies each if its model parameters (each weight and bias) $w_j$ by replacing it for $w_j - \frac{\eta}{k} g_r z_j$.

This is the step that modifies the federator model in order to optimize it, also called the descent step.

(g) The federator can transmit $g_r$ to each client.

By the end of this step, the federator has modified its local neural network model using the aggregate data from each client. Also, the federator can communicate such aggregate data to each client, amounting to k scalars per client.

**Client Synchronization**

What remains is for each client to synchronize its outdated local neural network model with the one held by the federator. For that, the clients can use the received $k$ scalars from the federator, $g_r$. It goes as follows:

1. For each sample number *r,* from 1 to *k*:

(a) The client constructs a new seed *s' by* concatenating s with *t* and with *r.*

(b) The client sets *s'* as the seed in its own PRNG module.

(c) The client iterates over the model parameters $w_j$ (that is, each weight and bias of the neural network).

(d) Then the client samples the same values $z_j$ from its PRNG as the federator (ensured through the common seed), using a Gaussian distribution with mean 0 and standard deviation 1, for each model parameter $w_j$.

(e) The client can modify each if its model parameters (each weight and bias) $w_j$ by replacing it for $w_j - \frac{\eta}{k} g_r z_j$.

By the end of the steps, both client and federator models are synchronized, they have again the same (updated) weights and biases and the training phase can once more be conducted. FIG. 3 highlights the iterative nature of the procedure and the steps conducted per iteration. FIG. 4 shows in more detail a specific iteration of the algorithm, highlighting the difference to a standard federated learning iteration as illustrated previously in FIG. 2.

It is novel to combine the different aspects: zero-order optimization, the shared seed concept, and the robust aggregation over the communicated scalars in a federated or distributed scenario.

The most related work proposes to use zero-order approximations for federated learning. Therein, communication efficiency is achieved through local iterations and partial device participation. While those tools could additionally straightforwardly be incorporated into the present disclosure, a much better communication efficiency can be achieved through the use of a shared seed, adapted from. Additionally accounting for byzantine clients in combination with zero-order methods (or gradient projection) in the federated or distributed learning setting is novel. There does not exist any work to be named here. Accounting for byzantine clients without communication and memory efficiency through zero-order methods was done.

In the procedure description, the aggregation function to be used is the trimmed mean - as this is the basis of the results. However, this choice of function can be made more general, in the sense that any kind of robust aggregation function can be used to replace the trimmed mean with no conceptual loss.

Furthermore, for ease of read, the procedure for the training of neural networks is described, but it can be also utilized for the training of any machine learning model that relies on gradient descent, this includes Linear Regression, Logistic Regression Support Vector Machines (SVMs), Decision Trees and Ensemble Methods (like Gradient Boosting), Generalized Linear Models (GLMs), Deep Learning Models (beyond standard neural networks, like CNNs and RNNs).

On top of the explained scheme, one can add end-to-end (public key) encryption between each client and the federator to ensure privacy of the communication scalars against an eavesdropper.

With a slight modification, this scheme can be adapted to account for partial client participation. It had been shown that in some cases, the learning algorithm does not suffer from the occasional participation of clients instead of each client computing a partial gradient at each iteration. While this approach often does not hurt the performance of the model, it can bring significant communication savings on top of the efficiency provided by the present scheme. To ensure this, the federator has to keep track of all gradients a client needs to update its local model to the global state after it did not contribute for a certain number of global iterations.

More specifically, the federator has to send the averaged gradients for each iteration and each projection together with the information of which of those belong to which iteration. This information is sufficient to bring all clients up to speed in every iteration, even if some of them did not participate in any amount of preceding iterations.

Different variants of PRNGs (apart from uniform) can be suited for generating the random projections. There is no reason to limit this approach to a specific random number generator. Which randomness is most suitable is application-specific and depends on the dataset and model used, although the proposed method may always be a good starting point.

Although the federated scenario is described, the described procedure can be used in any kind of distributed scenario, regardless of the ownership of data and devices being centralized or decentralized, as long as the training topography is the same - a central node and a set of worker nodes.

## 4. Experiments and Proof of Concept

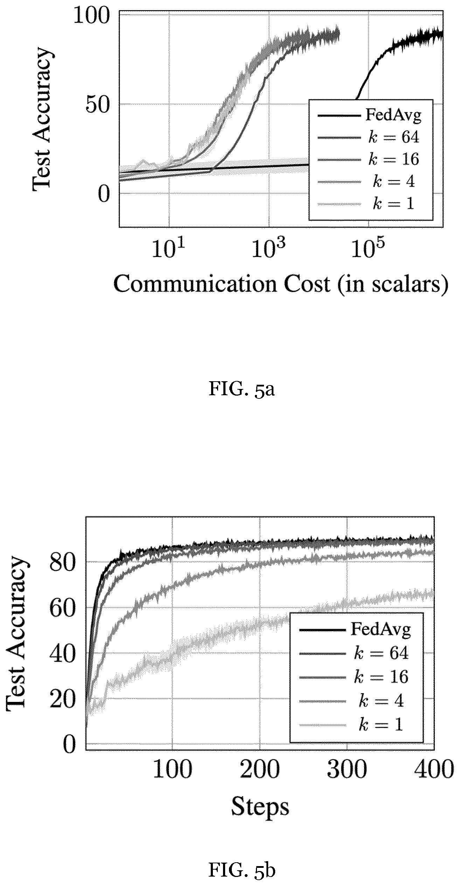

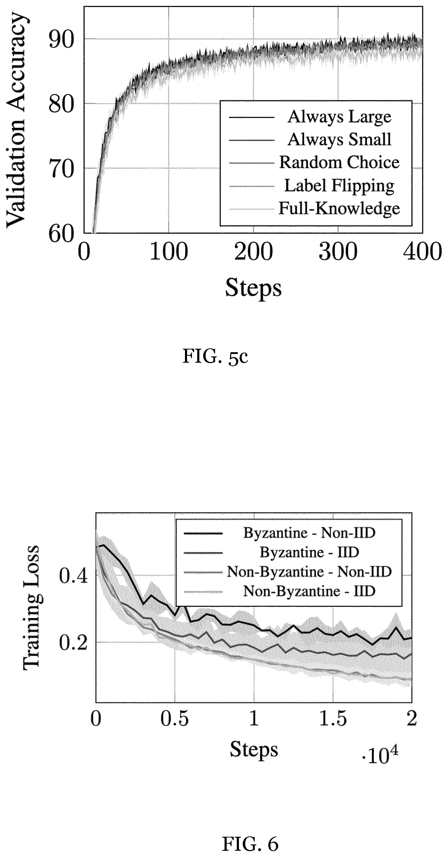

FIG. 5a to 5c illustrates CYBER -0 for logistic regression on MNIST under non-IID data distribution. FIG. 5a is a graph illustrating impact of sample size $k$ over the communication cost according to some embodiments of the present disclosure. FIG. 5b is a graph illustrating impact of sample size $k$ over the number of steps according to some embodiments of the present disclosure. FIG. 5c is a graph illustrating effect of Byzantine client behaviors according to some embodiments of the present disclosure. FIG. 6 is a graph illustrating the effect of Byzantine clients on the convergence speed of CYBER -0 when fine-tuning the RoBERTa large model on the SST-2 dataset. Specifically, FIG. 5a and 5b show the convergence for varying k in the absence of Byzantine clients compared to federated averaging (FedAvg). FIG. 5c shows different attacks for $k = 64$ and $\alpha = \beta = 0.25$.

### Experiments

A series of experiments showing the performance of CYBER -0 across various scenarios is presented. First, a Logistic Regression model on MNIST is employed to investigate the parameters' influence on the convergence of CYBER -0. This setting serves as a foundational test with insights into the baseline performance and parameter sensitivities of CYBER -0 in a controlled environment. For a more comprehensive understanding of CYBER -0's performance reaching towards advanced applications in Natural Language Processing (NLP), the examination is extended to federated fine-tuning of large language models (LLMs).

While Algorithm 1 completely specifies the behavior of CYBER -0, the section Details on Experiments A.1 presents an extended algorithm utilized for experiments, highlighting the memory and communication optimizations in implementation. The basic functionality of the algorithm remains unchanged.

### 4.1 Experimental Set-up

The key conditions for experiments are client data distribution and simulating Byzantine behaviors, explained next. General simulation parameters and hyperparameters are shown in the section Details on Experiments A.2. Tables and figures displaying standard deviation measures (denoted by the $\pm$ sign) represent the average outcomes of three independent simulation runs, initialized by different random seeds.

Data Distribution. Two distinct data distribution scenarios are investigated: independent and identically distributed (IID) data and non-IID data. In the IID scenario, data labels are uniformly distributed across all participating clients, ensuring an equal representation of each label in the local dataset. Conversely, in the non-IID scenario, a unique label set is assigned to each client, thereby creating a skewed label distribution and introducing additional complexity in the learning process.

Byzantine Behavior. A worst-case scenario is considered wherein Byzantine clients are fully aware of the communication protocol and the transmissions of other clients. Byzantine clients can collude and act in a deliberately adversarial manner. The present disclosure draws inspiration from the attack model, *i.e.,* focusing on maximizing the local gradient deviation at each training step. This is achieved by strategic manipulation of the information sent to the federator. In this attack, the Byzantine clients compute the true gradient estimate obtained from the honest clients. If that estimate is positive, they all send a value equal to the $\lfloor \beta m \rfloor$-th smallest honest gradient value. Otherwise, they all send a value equal to the $\lfloor \beta m \rfloor$-th largest honest gradient value. This attack is called Full Knowledge and described in Algorithm 3.

For the MNIST experiments, this choice is compared to other Byzantine behaviors to display its effectiveness. In particular, it is compared to three model poisoning strategies: Always Small, Always Large, and Random Choice, in which Byzantine clients all send either the $\lfloor \beta m \rfloor$-th smallest, largest or randomly pick one of them, respectively, for each perturbation direction. And a data positioning strategy, Label Flipping, in which the Byzantine devices switch each MNIST label from $\ell$ to 9 - $\ell$.

## 4.2 CYBER-0 with Logistic Regression on MNIST

Impact of Sample Size $k$. The training loss trajectories for diverse settings of the sample size parameter $k$ are illustrated in FIG. 5a over the cost of communication, and in FIG. 5b over the number of steps. The conventional federated averaging (FedAvg) is included as a benchmark.

A notable trend is observed: as the value of $k$ increases, the convergence rate progressively aligns with that of standard SGD. This aligns with following theoretical expectations, as a larger sample size $k$ yields a sample mean that more closely approximates the true gradient of the loss function.

Effect of Byzantine Client Behavior. FIG. 5c presents a comparative analysis of the training loss dynamics under different Byzantine client behaviors. The results show that the Full-Knowledge strategy presents the highest damage to the training process by causing the most substantial delay in convergence. This phenomenon underscores the potency of informed adversarial behaviors in disrupting the learning process.

Table 1: Comparison with state-of-the-art: test accuracies of CYBER-0 ($k$ = 64) in comparison with the trimmed mean and Krum algorithms under non-IID data distributions. The experiment uses $\beta = \alpha$, the Full-Knowledge attack for CYBER-0, and the model poisoning attacks for trimmed mean and Krum.

| ALGORITHM | $\alpha$ = 0.125 | $\alpha$ = 0.25 | $\alpha$ = 0.375 |
|---|---|---|---|
| KRUM | 69.2 $\pm$ 1.6 | 10.2$\pm$1.2 | 6.9$\pm$2.5 |
| TRIMMED MEAN | 86.6 $\pm$ 0.3 | 74.8 $\pm$ 1.1 | 36.0 $\pm$ 4.1 |
| CYBER-0 | 87.1$\pm$ 0.8 | 80.8 $\pm$ 1.0 | 60.3 $\pm$ 2.9 |

Table 2: Comprehensive comparison of CYBER-0 across varied configurations and datasets: This table presents a detailed analysis of CYBER-0's performance under different experimental setups. Non-Byzantine behavior stands for CYBER-0 with no Byzantine clients nor robust aggregation. Byzantine behavior uses $\beta = \alpha$ = 0.25. All results are averaged with standard deviations shown after the $\pm$.

| | NON-DISTRIBUTED [5] | CYBER-0 | | | |
|---|---|---|---|---|---|
| | | NON-BYZANTINE | | BYZANTINE | |
| | | IID | NON-IID | IID | NON-IID |
| SST-2 | 93.3$\pm$ 0.7 | 93.1$\pm$ 0.3 | 93.1$\pm$ 0.2 | 92.9$\pm$ 0.4 | 92.7 $\pm$0.4 |
| TREC | 94.3$\pm$ 1.3 | 95.4$\pm$ 0.3 | 95.8$\pm$ 0.4 | 92.1$\pm$ 1.5 | 78.2$\pm$ 0.7 |
| SNLI | 83.0 $\pm$ 1.0 | 84.8 $\pm$ 0.3 | 84.6 $\pm$ 0.7 | 80.0 $\pm$ 0.4 | 60.1 $\pm$ 4.9 |

Comparison with State-of-the-art. The performance of CYBER-0 is compared with the trimmed mean and Krum. For this comparison, The Full-Knowledge attack on CYBER-0 is applied, while applying the model poisoning attacks from for the state-of-the-art approaches, as those are the most effective attacks against the respective algorithms. The results are shown in Table 1.

CYBER-0 can provide better Byzantine resilience for all $\alpha$ values while achieving a roughly 100-fold communication reduction. It can be assumed that the projection over the random directions leaves fewer degrees if freedom for the Byzantine clients to change the aggregated gradient, hence providing good Byzantine resilience and allowing for communication efficiency.

## 4.3 Fine-Tuning Language Models with CYBER-0

The RoBERTa-large model can be utilized for three distinct NLP tasks: sentiment analysis, natural language inference (NLI) and topic classification. For sentiment analysis, the SST-2 dataset is employed. For NLI, the SNLI dataset is employed. For topic classification, the TREC dataset is used. A prompt-based fine-tuning approach in a few-shot learning framework is adopted. Fine-tuning LLMs is well-established in the literature. The details are omitted here for brevity.

A set of 512 data points distributed among the clients is used according to the specified data distribution pattern. These experiments intend to show the applicability of CYBER-0 in more complex and real-world scenarios, particularly in the increasingly relevant field of NLP.

In the classical theory of zero-order optimization, fine-tuning LLMs is deemed to be of prohibitively slow convergence due to the role exercised by the model dimension d. Nevertheless, certain problem domains exhibit an inherently low intrinsic dimensionality. The fast convergence of CYBER-0, cf. first and second columns of Table 2.

Robustness of CYBER-0. The ability of CYBER-0 to mitigate the effect of Byzantine clients, using the strong Full-Knowledge attack, can be seen in the right-most column of Table 2. In IID settings, CYBER-0 exhibits a small drop in accuracy. However, for non-IID settings, while still converging, CYBER-0 exhibits a drop in accuracy in the presence of Byzantine clients. This behavior aligns with the literature on non-IID robust FL. The main reason is that the non-IID data distribution is reflected in the clients' message updates. Making the distinction between malicious gradients and outliers more challenging. In addition to affecting the final accuracy, Byzantine clients also decrease the convergence speed of the algorithm. This effect on the SST-2 experiment is illustrated in FIG. 6, which complements the data presented in Table 2. Similar figures for the SNLI and TREC experiments are given in the section Details on Experiments A.3.

Communication optimizations and scalability aspects of CYBER-0 is further demonstrated by using RoBERTa-large on the SST-2 dataset. The number of samples per training step and the total number of clients is varied, cf. Table 3. The section Details on Experiments A.4 provides an extra set of experiments regarding local epochs.

Table 3: Varying the number of samples ($k$) and the number of clients ($m$) in SST-2 using RoBERTa-large in the presence of Byzantine clients with non-IID data distribution.

| $k$ | TOTAL STEPS | TEST ACCURACY | $m$ | BYZANTINE CLIENTS | TEST ACCURACY |
|---|---|---|---|---|---|
| 1 | 20,000 | $92.7 \pm 0.4$ | 8 | 2 | $92.7 \pm 0.4$ |
| 2 | 10,000 | $92.5 \pm 0.3$ | 16 | 4 | $92.5 \pm 0.4$ |
| 4 | 5,000 | $92.8 \pm 0.5$ | 32 | 8 | $92.3 \pm 0.6$ |
| 8 | 2,500 | $92.7 \pm 0.5$ | | | |

Number of Samples. As observed in Table 3, and consistent with findings from Section 4.2 CYBER-0 with Logistic Regression on MNIST, for fixed values of $m = 8$ and $\beta = 0.25$, an increase in the number of samples k correlates with accelerated convergence in terms of steps. CYBER-0 presents here a tradeoff between computational workload and communication efficiency. A larger value of $k$ necessitates more forward passes per training step. However, the transmission of these passes in batches potentially enhances communication efficiency by reducing the need for frequent synchronization rounds.

Number of Clients. The impact of scaling the number of clients is explored while maintaining the same ratio of Byzantine to non-Byzantine clients. As observed in Table 3, for fixed values of $k = 1$ and $\beta = 0.25$, increasing the number of clients does not significantly affect the final test accuracy. This outcome aligns with the expectation that similar data distribution among non-Byzantine clients would result in consistent learning patterns, regardless of the network size.

**Proof of Concept**

The algorithm is implemented on different data sets and models in a federated learning scenario both on IID (homogeneous) and non-IID (heterogeneous) data partitioning across the users. To show the impact of the number of projections $k$ (and hence the number of scalars to be communicated), the procedure is tested on the well-known MNIST dataset containing images of handwritten digits from 0 to 9. The task for the model is to classify the digits, for which a simple logistic regression model is used. FIG. 5 highlights the impact of $k$ on the accuracy of the classification task, reflecting the percentage of test image correctly classified after training the model. In FIG. 5b, it can be seen that with $k = 16$ comparable test accuracies are reached compared to transmitting the entire gradients at each iteration (cf. FedAvg). As can be seen from FIG. 5a, this accounts to roughly a 1000-fold saving in communication, despite reaching the same final performance of the model.

In the following, it is verified that the present efficient and secure algorithm is suitable for recent and complex real-world machine learning tasks to the extent of reaching competitive accuracies while providing significant advantages. The RoBERTalarge model is utilized for three distinct natural language processing (NLP) tasks: sentiment analysis, natural language inference (NLI) and topic classification. For sentiment analysis, the SST-2 dataset is employed. For NLI, the SNLI dataset is employed. For topic classification, the TREC dataset is used. Table 2 shows the results of the present procedure for both byzantine and non-byzantine behavior for IID and non-IID data. The baseline for experiments is the case where data is not distributed, hence there are no challenges associated with byzantine behavior or communication constraints. The results are depicted in the leftmost column. The remaining columns are generated by running the present procedure in a federated learning environment. The non-byzantine setting with IID data corresponds to the easiest training task, yielding comparable performance compared to the non-distributed setting. The fact that the present approach sometimes outperforms the baseline can be traced-back to statistical fluctuations and the fact that employed gradient compression technique has some inherent regularization properties, that can improve the final generalization capabilities of the model and hence the observed accuracy. It is shown that even in a non-IID setting (without Byzantine clients), the present proposed algorithm reaches state-of-the-art results, despite the heterogeneity of the clients' data. The two rightmost columns depict the results of training runs that can cope with the behavior of byzantine clients. Without countermeasure, the model would diverge from the optimal solution, hence not be able to learn anything useful from the dataset. With the proposed countermeasure, competitive accuracies can be achieved for both IID and non-IID data in most cases. Even for very challenging tasks (such as SNLI), it is observed that for non-IID data and the worst possible corrupt behavior of clients, the present procedure still ensures that the model can extract useful information from the data, resulting in 60% model accuracy.

All the results depicted for byzantine clients are worst-case results, since they require full knowledge of all adversarial clients, i.e., the knowledge of all other clients' computations and full knowledge of the countermeasure. This is a very unlikely scenario in practice, here meant to challenge the present algorithm in the worst possible way. Hence, the results are a very pessimistic underestimate of the present procedures' performance for realistic scenarios. Nevertheless, it can be concluded that the present approach reaches comparable performance compared to state-of-the-art while providing significant improvements in terms of communication cost, memory efficiency, and ensuring resiliency against byzantine adversaries. Having in mind that those challenges are one of the most challenging ones in current federated learning systems, the proposed algorithm is a very promising candidate to further drive the progress in (and the usefulness of) large-scale decentralized machine learning by alleviating major concerns.

While it is demonstrated that the present procedure has significant advantages while achieving state-of-the-art and competitive performances in challenging settings, it remains to compare the present algorithm against well-established countermeasures for byzantine behavior. Although those methods do not provide efficiency in terms of communication or memory usage, their capabilities of detecting corrupt clients can still be compared. In Table 2, the results for training a model on MNIST for different fractions $\alpha$ of byzantine clients are depicted. For each countermeasure evaluated, the worst-possible attack known, specifically tailored to the relative countermeasure, is utilized. Compared to the state-of-the-art countermeasures KRUM and Trimmed-Mean, the present algorithm provides significantly better robustness. Additionally considering that the present algorithm provides a multi-fold saving in communication costs and memory efficiency while training, as well as the option to be used without performing backpropagation, this is an impressive indicator for the effectiveness of the present disclosure.

## 5. Theoretical Analysis

To complement the present extensive numerical results, a theoretical convergence guarantee for CYBER-0 for convex loss functions and IID data distribution is provided. The results under those assumptions quantify the interplay between convergence guarantee and the choice of $\mu$, $k$, and $d$ in well-behaved settings and pave the way to an extended analysis for non-convex losses and non-IID data distribution.

A probabilistic bound on the distance between the robust gradient estimation yielded by the present method and the ideal expected gradient obtained in a Byzantine-free context is established. With such a bound established, a convergence analysis is carried for an SGD algorithm that operates under bounded-error conditions, using the zero-order gradient estimate.

### 5.1 Preliminaries

To establish theoretical results, an assumption is made on the data distribution and define the population loss and the zero-order population estimate.

Assumption 5.1 (IID Data Distribution). Each client $i$ has a set of $n$ data samples $\{\gamma^{i,1},...,\gamma^{i,n}\}$ sampled from a common data distribution D.

Definition 5.2 (Population Loss). The population loss $F(w)$ is expressed as the expected value of the loss over $\mathcal{D}$, i.e., $F(\boldsymbol{w}) = \mathbb{E}_{\gamma \sim \mathrm{D}}[f(\boldsymbol{w}\,;\gamma)]$.

Associated with the population loss, there is the following optimization problem

$$\boldsymbol{w}^{\star} = \underset{\boldsymbol{w} \in \mathcal{W}}{\mathrm{argmin}}\, F(\boldsymbol{w}). \tag{1}$$

Assumption 5.3 (Local Minimum). The model $w^*$ is a local minimum of $F$.

Definition 5.4 (Zero-Order Population Estimate). Let $F$ be the population loss for the optimization problem in (1), then the zero-order population estimate is defined by:

$$\bar{g}(w, z) = \mathbb{E}_{\gamma \sim D}[g(w, z, \gamma)] = \begin{cases} d\frac{F(w+\mu z)-F(w-\mu z))}{2\mu}z, & \text{for } \mu > 0, \\ d\langle \nabla F(w), z \rangle z, & \text{for } \mu = 0, \end{cases}$$

and its norm by $\bar{g}(w, z) = \|\bar{g}(w, z)\|_2$.

## 5.2 Robustness Error Bound

The derivation of the aforementioned bound proceeds by adding three assumptions on the functions $g$, $f$ and $F$ and the parameter space $\mathcal{W}$.

Assumption 5.5 (Smoothness). Consider any $\mu \geq 0$, $\gamma \in \Gamma$, $w \in \mathbb{R}^d$, and $z \in \mathbb{S}^d$. Assuming that $g(\cdot, z, \gamma)$ exhibits $L_{w,\mu}$-Lipschitz continuity, $g(w, \cdot, \gamma)$ exhibits $L_{z,\mu}$-Lipschitz continuity and that $f(\cdot, \gamma)$ is L-smooth. Additionally, it is assumed that F(.) demonstrates $L_F$ - smoothness. For simplicity of notation, $\hat{L}_\mu = L_{w,\mu} + L_{z,\mu}$ is denoted.

Assumption 5.6 (Sub-Exponentiality). For all $\mu \geq 0$, $z \in \mathbb{S}^d$, and $w \in \mathcal{W}$, $g(w, z, \gamma)$ is distributed as a $v$-sub-exponential random variable, conditioned upon $\gamma$ being sampled from D.

Assumption 5.7 (Restriction on $\mathcal{W}$). $\mathcal{W}$ is both convex and compact with a predefined diameter $\mathcal{D}$.

With these assumptions in place, it is now possible to establish a bound on the discrepancy between the robust estimate and the expected estimate among benign clients.

Theorem 5.8 (Robustness Error Bound). Let $\mu \geq 0$, $z \in \mathbb{S}^d$, $\varepsilon > 0$. *Then for any $z_r \in \mathbb{S}^d$ for $r \in [k]$, under Assumptions 5.5, 5.6,* $\alpha \leq \beta < \frac{1}{2} - \epsilon$ *and with probability at least*

$$1 - \frac{4}{(1+2nm\hat{L}_\mu)^d(1+nm\hat{L}_\mu D)^d}$$

$$\left\| \frac{1}{k}\sum_{r=1}^{k}\hat{g}_\beta(w, z_r)z_r - \frac{1}{k}\sum_{r=1}^{k}\bar{g}(w, z_r) \right\|_2 \leq \Delta,$$

*for*

$$\Delta \triangleq \sqrt{\log(1+nm\hat{L}_\mu D)+\log(1+2nm\hat{L}_\mu)+\frac{1}{d}\log m} \times \frac{v\sqrt{d}}{\epsilon}\left(\frac{3\beta}{\sqrt{n}}+\frac{\sqrt{2}}{\sqrt{nm}}\right) + \tilde{O}\left(\frac{\beta}{n}+\frac{1}{mn}\right).$$

## 5.3 Convergence analysis

To study the convergence properties of the proposed algorithm, it is explored how the algorithm behaves in scenarios with different values of the parameter $\mu$ under the assumption of strong convexity.

Assumption 5.9 (Strong-Convexity). $F(w)$ is $\lambda$-strongly convex.

Under this premise, the convergence characteristics of Algorithm 1 for $\mu = 0$ are analyzed.

Theorem 5.10 (Convergence, $\mu = 0$). *Assume $\mu = 0$, $\varepsilon > 0$, set* $\tau = \frac{d+k-1}{k}$ *and* $\eta = \frac{1}{\tau L_F}$ *in Algorithm 1, let*

$$\mathcal{Z}^t = \left\{z_1^t, z_2^t, \ldots, z_k^t\right\}$$

*be the k uniformly and independently sampled vectors from* $\mathbb{S}^d$ *and let*

$$\mathcal{Z}^t = \bigcup_{i=0}^{t} Z^i.$$

*Under Assumptions 5.5, 5.6, and 5.9, with the constraint* $\alpha \leq \beta < \frac{1}{2}$ *- ε, and a probability of at least* $1 - \frac{4}{(1+2nm\hat{L}_\mu)^d(1+nm\hat{L}_\mu D)^d}$ *the following holds:*

$$\mathbb{E}_{\mathcal{Z}^T}[\|\boldsymbol{w}^T - \boldsymbol{w}^*\|_2] \leq \left(1 - \frac{\lambda}{\tau(L_F + \lambda)}\right)^T \|\boldsymbol{w}^0 - \boldsymbol{w}^*\|_2 + \frac{2}{\lambda}\Delta$$

*where $w^T$ is the parameter vector at the T-th step and $\Delta$ is the same as defined in Theorem 5.8.*

To achieve an order-optimal error rate of $\tilde{O}\left(\frac{\beta}{\sqrt{n}} + \frac{1}{\sqrt{nm}}\right)$, where the $\beta$ term represents the introduced error by the Byzantine behavior, the number of training steps $T$ should be at least $\frac{\tau(L_F + \lambda)}{\lambda} \log\left(\frac{\lambda}{2\Delta} \|\boldsymbol{w}^T - \boldsymbol{w}^*\|_2\right)$.

Consistent with zero-order theory, the analysis reveals a linear dependence of the convergence rate on the model dimension $d$, not observed in first-order methods. This dependence is encapsulated in the parameter $\tau$. As the number of sampled perturbation directions $k$ increases, the present algorithm approximates the standard first-order rate of convergence.

The following examines the case where $\mu > 0$.

Definition 5.11 (Smoothed Version of F). Let *F be* a population loss, for any $\mu > 0$ and $w \in \mathbb{R}^d$. The *smoothed version* of F, $F\mu : \mathbb{R}^d \to \mathbb{R}$ is defined as $F\mu(w) = \mathbb{E}_{z \sim \mathbb{S}^d}[F(w + \mu z)]$.

Assumption 5.12 (Local Minimum of $F\mu$). $\boldsymbol{w}_\mu^* = \arg\min_{w \in \mathcal{W}} F_\mu(w)$ is local minimum of $F_\mu$.

For any $w$, $F(w)$ and $F\mu(w)$ cannot differ more than $\frac{L\mu^2}{2}$, implying that the solutions $F(w^*)$ and $F(w_\mu^*)$ can be made arbitrarily close by the choice of $\mu$.

Theorem 5.13 (Convergence, $\mu > 0$). Assume $\mu > 0$, set $\tau = \frac{2d + (k-1)(1+\sqrt{d})}{k}$ and $\eta = \frac{1}{2\tau L_F}$ in Algorithm 1 and let $\mathcal{Z}^t$ be as in Theorem 5.10. Under Assumptions 5.5, 5.6, and 5.9, with $\alpha \leq \beta < \frac{1}{2} - \epsilon$, and a probability of at least $1 - \frac{4}{(1+2nm\hat{L}_\mu)^d(1+nm\hat{L}_\mu D)^d}$ the following holds:

$$\mathbb{E}_{\mathcal{Z}^T}[\|\boldsymbol{w}^T - \boldsymbol{w}_\mu^*\|_2] \leq \left(1F - \frac{\lambda}{2\tau(L_F + \lambda)}\right)^T \|\boldsymbol{w}^0 - \boldsymbol{w}_\mu^*\|_2 \frac{2}{\lambda}\Delta + \frac{8\sqrt{2}\mu dL_F}{\lambda}\sqrt{1 + \frac{\tau}{4}},$$

*where $w^T$ is the parameter vector at the T-th step of Algorithm 1 and $\Delta$ is as defined in Theorem 5.8.*

Similar to the results for $\mu = 0$, with $\mu > 0$, the same order-optimal error rate is observed under appropriate conditions for $T$. Notably, for $k = 1$, the convergence rate scales linearly with the dimension $d$. However, unlike the case with $\mu = 0$, increasing $k$ does not entirely mitigate this linear dependency, leaving a residual term proportional to $\sqrt{d}$.

## 6 Related Work

Zero-order Optimization. In recent years, zero-order optimization has significantly evolved, broadening its applicability across various domains. This technique has been particularly instrumental in areas such as black-box optimization and reinforcement learning as gradient computations are not required.

A novel and notable application has emerged with the fine-tuning of LLMs, showcasing the versatility of zero-order optimization as a memory-efficient technique to allow the fine-tuning of billion-parameter models, while only using a fraction of the memory required by the first-order counterparts.

Communication Efficiency. Communication efficiency through gradient compression, can be mainly divided into two categories: quantization-based methods, and sparsification-based methods. None of those, however, are tailored for zero-order estimates, in the sense that they act on the d-dimensional gradients. The present disclosure relies on compression on the gradient estimate by transmitting only the difference in perturbation losses, while taking advantage of an agreed randomness.

Byzantine Resilience. To mitigate adversarial conditions in the learning process, recent research has seen a surge in the development of Byzantine resilient algorithms. The present disclosure is closely related to applying one-dimensional coordinate-wise statistical robustness techniques to the gradient information transmitted by the clients. In contrast, countermeasure is applied for each perturbation, posing new theoretical challenges and bridging zero-order estimation and statistical robustness.

Poisoning attacks. From the wide range of attacks applied to Byzantine-resilient algorithms, data poisoning and model manipulation are specially mentioned. Both attacks enable Byzantine clients to effectively reduce the speed of convergence, increase the error rate, or completely disrupt the optimization result. The attack model is related to that the Byzantine clients use the full information about the other clients' responses to maximize the deviation from the benign estimate in each optimization steps.

The present disclosure introduces CYBER-0, a novel federated zero-order optimization scheme designed to withstand Byzantine behaviors. Its effectiveness even under challenging conditions is demonstrated, which include a coordinated full-knowledge attack on non-IID data distributions. The theoretical analysis underlines the robustness of CYBER-0, illustrating the limited ability of Byzantine clients to significantly influence the learning process. CYBER-0 can be further enhanced by exploring advanced compression techniques, such as quantization, to optimize the transmission of values within CYBER-0.

The importance of integrating privacy-enhancing measures further opens up many potential directions including the incorporation of differential privacy, homomorphic encryption, and secure multi-party computation. The inherent efficiency of CYBER-0 yields promising compatibility with privacy preserving techniques, potentially opening up new frontiers in secure, private and efficient federated learning.

It should be noted that the above description is merely provided for the purposes of illustration, and not intended to limit the scope of the present disclosure. For persons having ordinary skill in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer readable program code embodied thereon.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## A. Details on Experiments

### A.1 Experimental Algorithm

Here, the algorithm utilized for the experiments presented in Section 4 Experiments and Proof of Concept is elaborated in detail. Algorithm 2 illustrates the optimization steps that enable CYBER-0 to attain both communication and memory efficiency. Notably, the key differences from Algorithm 1 include:

**Perturbation Direction Sampling.** Contrary to the original method of sampling the perturbation directions z from the unit sphere $\mathbb{S}^d$ and scaling the estimate by a factor of d, the practical approach involves sampling each coordinate of z independently from a standard Gaussian distribution. This modification, while seemingly minor, has significant practical implications. On one hand, this modification retains the theoretical guarantees - the expected norm squared is identical to that of sampling over the unit sphere, and the normalized variance of the norm also decreases with increasing d. At the same time, from a practical point of view, it facilitates iterative sampling for each gradient coordinate, thereby considerably reducing the memory requirement in contrast to allocating the entire vector.

**Shared Randomness.** Since zero-order optimization requires clients and the federator to agree upon the perturbation directions, one approach would be that, each client receives the transmission of perturbation directions from the federator. This would entail a significant downlink communication overhead. Instead, the optimized method relies on pseudorandom generation. A single seed value is transmitted from the federator to the clients at the start of the training loop. This enables every client to independently reconstruct all perturbation directions, dismissing the need for direct transmission from the server. The principal advantage of this strategy lies in its significant reduction of communication costs per training step-from communicating a d-dimensional vector to merely a single value per sample.

**In-Place Operations.** The standard procedure involves allocating memory for intermediate values such as perturbation vectors and perturbed models. In the present approach, these operations are executed in place. This method not only conserves memory but also streamlines the computational process. By performing and subsequently reversing these operations in place, a low memory footprint is maintained throughout the training phase.

## Algorithm 2 CYBER-0- Experimental Setup

**Input:** $w^0$ is the initial model parameter vector, $\beta$ is the trimmed mean factor, $\eta$ is the learning rate, $\mu$ is the perturbation step, $k$ is the number of samples per estimate and $T$ is the total number of learning steps.

▶ **Federator**

    Distributes a random seed $s$ to each client

    Distributes $w_i^0 = w^0$ to each client

**for** $t = 0$ **to** T **do**

    **for** $i = 1$ **to** m **in parallel do**

        ▷ **client** $i$

        **for** $r = 1$ **to** $k$ **do**

$$s' \leftarrow (s, t, r)$$

$$g_r^i \leftarrow \begin{cases} \text{ZOGRAD}(F, w_i^t, B, \mu, s') & \text{if } i \notin \mathcal{B} \\ * & \text{else} \end{cases}$$

        **end for**

        Sends $\{g_r^i\}_{r=1}^k$ to federator

**end for**


// Federator robust aggregation

▶ **Federator**

    **for** $r = 1$ **to** k **do**

$$\hat{g}_r \leftarrow trmean_\beta \left\{ \left\{ g_r^i \right\}_{i=1}^m \right\}$$

$$w^t \leftarrow \text{PERTURBPARAMS}(w^t, -\tfrac{\eta \hat{g}_r}{k}, s')$$

    **end for**

    Sends $\left\{ \{\hat{g}_r\}_{r=1}^k \right\}$ to each client


// clients synchronization

**for** $i = 1$ **to** $m$ **in parallel do**

    ▷ **client** $i$

    **for** or $r = 1$ **to** $k$ **do**

$$s' \leftarrow (s, t, r)$$

$$w_i^t \leftarrow \text{PERTURBPARAMS}(w_i^t, -\tfrac{\eta \hat{g}_r}{k}, s')$$

    **end for**

    **end for**

**end for**


**function** ZOGRAD($F, w, B, \mu, s'$)

$$w \leftarrow \text{PERTURBPARAMS}(w, \mu, s')$$
$$l_+ \leftarrow F(w, B)$$
$$w \leftarrow \text{PERTURBPARAMS}(w, -2\mu, s')$$
$$l_- \leftarrow F(w, B)$$
$$w \leftarrow \text{PERTURBPARAMS}(w, \mu, s')$$

Return $\frac{l_+ L_-}{2\mu}$

**end function**

**function** PERTURBPARAMS$(w, \mu, s')$

Set RNG seed as $s'$

**for each** $w^{(i)}$ in $w$ do

$z \sim \mathcal{N}(0,1)$

$w^{(i)} \leftarrow w^{(i)} + \mu z$ // Memory efficient

**end for**

**end function**

Here the Algorithm summarizing the Full-Knowledge attack is provided.

**Algorithm 3** Full-Knowledge Byzantine Behavior

**Input:** $w^t, \beta, \mu,$ $z_r^t, g_i(w^t, z_r^t) \, \forall i \in [m]$.

**for** device $b \in \mathcal{B}$ **do**

$\hat{g}_{true} \leftarrow \frac{1}{m} \sum_{i=1}^{m} g_i(w^t, z_r^t)$

**if** $\hat{g}_{true} \geq 0$ **then**

Send the $\lfloor \beta m \rfloor$-th smallest value of $\{g_i(w^t, z_r^t) : i \in [m] \setminus \mathcal{B}\}$

**else**

Send the $\lfloor \beta m \rfloor$-th largest value of $\{g_i(w^t, z_r^t) : i \in [m] \setminus \mathcal{B}\}$

**end if**

**end for**

**A.2 Simulation Parameters and Hyperparameters**

**A.2.1 Logistic Regression on MNIST**

The simulation parameters and hyperparameters for all CYBER-0 experiments in Section 4.2 CYBER-0 with Logistic Regression on MNIST are found in Table 4. Exceptionally, in the experiments of Table 1, m = 40 is used. All results in Section 4.2 CYBER-0 with Logistic Regression on MNIST are averaged across three random seeds.

Table 4: Simulation Parameters and Hyperparameters for Section 4.2 CYBER-0 with Logistic Regression on MNIST

| MNIST DATA SET | |
| --- | --- |
| GLOBAL TRAIN SAMPLES | 60,000 |
| NUMBER OF CLIENTS | 12 |

(continued)

| MNIST DATA SET | |
|---|---|
| NUMBER OF BYZANTINE CLIENTS | 3 |
| $\beta$ | 0.25 |
| LEARNING RATE | $10^{-2}$ |
| CLIENT BATCH SIZE | 64 |
| LEARNING STEPS | 400 |

All of simulations can be run in a single GPU setting using an Nvidia RTX 4090 GPU.

### A.2.2 Prompt-Based Fine-Tuning

The simulation parameters and hyperparameters for all CYBER-0 experiments in Section 4.3 Fine-Tuning Language Models with CYBER-0 are found in Table 5. For Table 1 and 2, results are averaged across three different random seeds.

Table 5: Simulation Parameters and Hyperparameters for Section 4.3 Fine-Tuning Language Models with CYBER-0

| | SST-2 | SNLI | TREC |
|---|---|---|---|
| GLOBAL TRAIN SAMPLES | | 512 | |
| NUMBER OF CLIENTS | 8 | 12 | 12 |
| NUMBER OF BYZANTINE CLIENTS | 2 | 3 | 3 |
| $\beta$ | | 0.25 | |
| LEARNING RATE | | $10^{-6}$ | |
| CLIENT BATCH SIZE | | 64 | |
| LEARNING STEPS | 20,000 | 20,000 | 40,000 |

### A.3 Further Loss Curves for TREC and SNLI

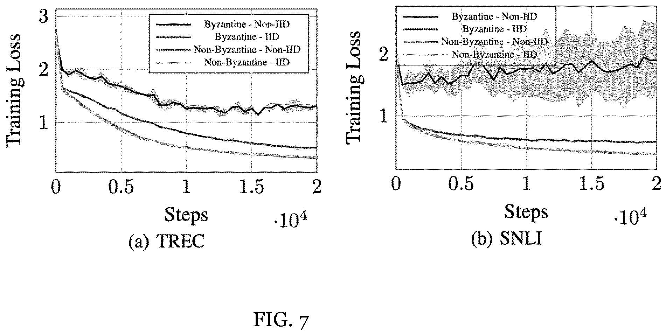

In this section, two additional loss curves for the TREC and SNLI experiments are presented. Both curves are shown in FIG. 7. For both datasets, a convergence reduction for the Non-Byzantine setting is observed. For SNLI, the reduction appears greater, which aligns with the results in Table 2.

### A.4 Local Epochs

In the present experimental framework, the investigation can be extended to evaluate the performance of CYBER-0 under the context of local epochs. This involved adapting practical algorithm (Algorithm 2) to include local epochs, incorporating memory-efficient operations, as detailed in Algorithm 4.

The findings, as summarized in Table 6, reveal an intriguing parallel to the impact of the variable $k$. Specifically, modifying the number of local epochs appears to exert a comparable influence. A notable insight from this experiment is the relative stability of the final test accuracy, despite variations in batching these training epochs. However, it's important to acknowledge that the efficacy of such a technique can be highly dependent on the specific problem at hand, suggesting a need for cautious interpretation and application in different contexts.

FIG. 7 shows Contrasting Byzantine and Non-Byzantine Scenarios Across Diverse Data Distributions with RoBERTa-large on TREC and SNLI: This figure compares the performance of CYBER-0 using a RoBERTa-large model on both TREC and SNLI datasets. Non-Byzantine behavior stands for CYBER-0 with no Byzantine clients nor robust aggregation.

Table 6: Assessing the Impact of Varying Local Epochs in SST-2 Using RoBERTa-large: This table provides a comparative analysis of how different settings for local epochs affect performance on the SST-2 dataset using the RoBERTa-large model on a Byzantine and non-IID setting.

| LOCAL EPOCHS | COMMUNICATION ROUNDS | TEST ACCURACY |
|---|---|---|
| 1 | 20,000 | $92.7 \pm 0.4$ |
| 5 | 4,000 | $92.6 \pm 0.3$ |

(continued)

| LOCAL EPOCHS | COMMUNICATION ROUNDS | TEST ACCURACY |
| --- | --- | --- |
| 50 | 400 | $92.8 \pm 0.5$ |
| 100 | 200 | $92.4 \pm 0.2$ |

**Algorithm 4** CYBER-0- Experimental Setup with Local Epochs

**Input:** $w^0$ is the initial model parameter vector, $\beta$ is the trimmed mean factor, $\eta$ is the learning rate, $\mu$ is the perturbation step, k is the number of samples per estimate, E is the number of local epochs and T is the total number of learning steps.

▶ **Federator**

    Distributes a random seed $s$ to each client

    Distributes $w_i = w^0$ to each client

    Sets $w \leftarrow w^0$

**for** $t = 1$ **to** $T$ **do**

    **for** $i = 1$ **to** $m$ **in parallel do**

      ▷ **client** $i$

        **for** $e = 1$ **to** $E$ **do**

          // Sample $k$ grad estimates

          **for** $r = 1$ **to** $k$ **do**

            $s' \leftarrow (s, t, r, e)$

$$g_{r,e}^{i,t} \leftarrow \begin{cases} \text{ZOGRAD}(F, w_i, B, \mu, s') & \text{if } i \notin \mathcal{B} \\ * & \text{else} \end{cases}$$

**end for**

// Apply local epoch learning step

**for** *r = 1* **to** *k* **do**

$s' \leftarrow (s, t, r, e)$

$w_i \leftarrow \text{PERTURBPARAMS}(w_i, -\frac{\eta g_{r,e}^{i,t}}{k}, s')$

**end for**

**end for**

// Reset model to start of local epochs (alternatively, can store initial model, with extra 610 memory cost)

**for** *e = 1* **to** *E* **do**

**for** *r = 1* **to** *k* **do**

$s' \leftarrow (s, t, r, e)$

$w_i \leftarrow \text{PERTURBPARAMS}(w_i, -\frac{\eta g_{r,e}^{i,t}}{k}, s')$

**end for**

**end for**

Sends $\left\{ \left\{ g_{r,e}^{i,t} \right\}_{r=1}^{k} \right\}_{e=1}^{E}$ to federator

**end for**

// Federator robust aggregation

▶ **Federator**

**for** *e = 1* **to** *E* **do**

**for** *r = 1* **to** *k* **do**

$\hat{g}_{r,e}^{t} \leftarrow \text{TrMn}_\beta \left\{ \left\{ g_{r,e}^{i} \right\}_{i=1}^{m} \right\}$
$s' \leftarrow (s, t, r, e)$

$w \leftarrow \text{PERTURBPARAMS}(w, -\frac{\eta \hat{g}_{r,e}^{t}}{k}, s')$

**end for**

**end for**

Sends $\left\{ \left\{ \hat{g}_{r,e}^{t} \right\}_{r=1}^{k} \right\}_{e=1}^{E}$ to each client

// clients synchronization

**for** *i = 1* **to** *m* **in parallel do**

▷ **client** *i*

**for** *e = 1* **to** *E* **do**

**for** *r = 1* **to** *k* **do**

$s' \leftarrow (s, t, r, e)$

$w_i \leftarrow \text{PERTURBPARAMS}(w_i, -\frac{\eta g_{r,e}^{i,t}}{k}, s')$

**end for**

**end for**

**end for**

**end for**

**function** $\text{ZOGRAD}(F, w, B, \mu, s')$

$w \leftarrow \text{PERTURBPARAMS}(w, \mu, s')$
$l_+ \leftarrow F(w, B)$
$w \leftarrow \text{PERTURBPARAMS}(w, -2\mu, s')$
$l_- \leftarrow F(w, B)$
$w \leftarrow \text{PERTURBPARAMS}(w, \mu, s')$    // Reset model state

$\text{Return } \dfrac{l_+ L_-}{2\mu}$

**end function**

**function** $\text{PERTURBPARAMS}(w, \mu, s')$

Set RNG seed as $s'$

**for each** $w^{(i)}$ **in** $w$ **do**

$z \sim \mathcal{N}(0,1)$

$w^{(i)} \leftarrow w^{(i)} + \mu z$ // Memory efficient

**end for**

**end function**

## Claims

1. A computer-implemented method for training a model using a central node and a plurality of client nodes, comprising, at one or more of the plurality of client nodes:

   receiving a set of model parameters and an initial seed from the central node;
   determining an update direction based on the initial seed;
   computing a scalar reflecting a sign and a size of an approximation of a projection of a gradient of a loss function on the update direction, using the set of model parameters;
   sending the scalar of the approximated gradient projection to the central node;
   receiving a model update scalar from the central node; and
   updating the set of model parameters in the update direction based on the model update scalar.

2. The method according to claim 1, wherein determining the update direction based on the initial seed comprises:

   constructing a current seed for each iteration during training the model based on the initial seed, preferably wherein the current seed is the same in each iteration during training the model;
   designating the current seed for a pseudo-random number generator, PRNG;
   sampling a PRNG result from the PRNG; and
   generating the update direction based on the PRNG result.

3. The method of claim 1 or 2, wherein computing the scalar of the approximation of the projection of the gradient of the loss function on the update direction comprises:

determining the gradient using backpropagation; and
projecting the gradient on the update direction to obtain the scalar of the approximation of the gradient projection.

4. The method of claim 1 or 2, wherein computing the scalar of the approximation of the projection of the gradient of the loss function on the update direction comprises:
evaluating the loss function using the set of model parameters perturbed into the update direction, preferably wherein evaluating the loss function using the set of model parameters perturbed into the update direction comprises:

perturbing the set of model parameters;
updating the set of model parameters to a set of perturbed model parameters;
calculating a first perturbed value and a second perturbed value based on the set of perturbed model parameters; and
determining the approximated gradient of the loss function in the update direction based on the first perturbed value and the second perturbed value.

5. The method of any of claims 1 to 4, wherein the model comprises at least one of Linear Regression, Logistic Regression, Support Vector Machine, Decision Tree, Ensemble Methods, Generalized Linear Model, Neural Networks, Deep Learning Model, and fine-tuning Large Language Models.

6. A computer-implemented method for orchestrating training a model using a central node and a plurality of client nodes, comprising, at the central node:

sending a set of model parameters and an initial seed to the plurality of client nodes; and
iteratively executing, until a preset condition is satisfied:

receiving a plurality of scalars of approximated gradient projections from the plurality of client nodes;
aggregating them to obtain a model update scalar; and
sending the model update scalar to the plurality of client nodes.

7. The method of claim 6, further comprising computing an updated model at the central node at every iteration or at the end.

8. The method of claim 6 or 7, further comprising determining the update direction based on the initial seed, wherein determining the update direction based on the initial seed comprises:

constructing a current seed for each iteration during training the model based on the initial seed, preferably wherein the current seed is the same in each iteration during training the model;
designating the current seed for a pseudo-random number generator, PRNG;
sampling a PRNG result from the PRNG; and
generating the update direction based on the PRNG result.

9. The method according to any of claims 6 to 8, wherein the aggregating the plurality of the scalars of the approximated gradient projections to obtain the model update scalar is achieved by an aggregation rule.

10. The method according to any of claims 6 to 9, wherein the preset condition comprises one or more of convergence of the model and a desired performance metric.

11. A client node configured to perform the method of any of claims 1 to 5.

12. A central node configured to perform the method of any of claims 6 to 10.

13. A distributed machine learning system, comprising:

a plurality of client nodes according to claim 11; and
a central node according to claim 12.

14. The distributed machine learning system of claim 13, wherein communication between the plurality of client nodes and the central node is secured by end-to-end encryption.

**15.** A computer-readable storage medium storing program code, the program code comprising instructions that when executed by a processor carry out the method of any of claims 1 to 10.

FIG. 1

FIG. 2

FIG. 3

Robust aggregation (cf. 3.1.3.2):

receive $\{g_r^i\}_{r\in[k], i\in\{1,2,3\}}$ → compute trimmed mean $\{g_r\}_{r\in[k]}$

$\{g_r\}_{r\in[k]}$   $\{g_r\}_{r\in[k]}$   $\{g_r^2\}_{r\in[k]}$   $\{g_r^3\}_{r\in[k]}$

$\{g_r^1\}_{r\in[k]}$   $\{g_r\}_{r\in[k]}$

UE 1   UE 2   UE 3

Client synchronization (cf. 3.1.3.3): receive $\{g_r\}_{r\in[k]}$ → update $w_j$'s

Clients training (cf. 3.1.3.1): use $w_j$'s → compute $g_r^i$

FIG. 4

FIG. 5a

FIG. 5b

FIG. 5c

FIG. 6

(a) TREC

(b) SNLI

FIG. 7

| | Europäisches Patentamt European Patent Office Office européen des brevets | **EUROPEAN SEARCH REPORT** | **Application Number** EP 24 18 2419 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Lan Guangchen: "Privacy-Preserving Federated Learning Based on Evolution Strategies", , 9 November 2023 (2023-11-09), pages 1-12, XP093225417, Retrieved from the Internet: URL:https://arxiv.org/pdf/2311.03405 * abstract * * Section II.A * * Section II.B * * Algorithm 1 * ----- | 1-3,5-15 | INV. G06F16/906 G06N3/00 |
| Y | Hao Yongchang ET AL: "FLORA: Low-Rank Adapters Are Secretly Gradient Compressors", , 12 June 2024 (2024-06-12), pages 1-18, XP093225586, Retrieved from the Internet: URL:https://arxiv.org/pdf/2402.03293 * abstract * * Section 2.2 * * Section 2.3 * * Algorithm 1 and 2 * ----- -/-- | 1-3,5-15 | |
| | | | TECHNICAL FIELDS SEARCHED (IPC) G06F G06N |

The present search report has been drawn up for all claims

| Place of search | Date of completion of the search | Examiner |
|---|---|---|
| Berlin | 19 November 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 18 2419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Fang Wenzhi ET AL: "Communication-Efficient Stochastic Zeroth-Order Optimization for Federated Learning", , 10 October 2022 (2022-10-10), pages 1-15, XP093224633, Retrieved from the Internet: URL:https://arxiv.org/pdf/2201.09531 * abstract * * Section II.B * * Section II.C * * Algorithm 1 * ----- | 1-15 | |
| T | De Sá Afonso ET AL: "Communication-Efficient Byzantine-Resilient Federated Zero-Order Optimization", , 20 June 2024 (2024-06-20), pages 1-25, XP093224631, Retrieved from the Internet: URL:https://arxiv.org/pdf/2406.14362v1 * the whole document * ----- | | |

TECHNICAL FIELDS
SEARCHED (IPC)

The present search report has been drawn up for all claims

| Place of search | Date of completion of the search | Examiner |
|---|---|---|
| Berlin | 19 November 2024 | Pose Rodríguez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                        
& : member of the same patent family, corresponding
document

EPO FORM 1503 03.82 (P04C01)

**EP 4 664 324 A1**

## REFERENCES CITED IN THE DESCRIPTION

**Non-patent literature cited in the description**

- **MCMAHAN, B.** ; **MOORE, E.** ; **RAMAGE, D.** ; **HAMPSON, S.** ; **Y AREAS, B. A.** *Communication-Efficient Learning of Deep Networks from Decentralized Data*